(19) Europäisches Patentamt
European Patent Office
Office européen des brevets

(11) **EP 4 235 835 A1**

(12) **EUROPÄISCHE PATENTANMELDUNG**

(43) Veröffentlichungstag:
**30.08.2023   Patentblatt 2023/35**

(21) Anmeldenummer: 22158276.0

(22) Anmeldetag: **23.02.2022**

(51) Internationale Patentklassifikation (IPC):
$H01M\ 4/06^{(2006.01)}$        $H01M\ 4/24^{(2006.01)}$
$H01M\ 4/38^{(2006.01)}$        $H01M\ 4/50^{(2010.01)}$
$H01M\ 6/04^{(2006.01)}$        $H01M\ 50/627^{(2021.01)}$
$H01M\ 50/673^{(2021.01)}$      $H01M\ 50/77^{(2021.01)}$
$H01M\ 50/102^{(2021.01)}$

(52) Gemeinsame Patentklassifikation (CPC):
**H01M 50/77; H01M 4/06; H01M 4/24; H01M 4/386;
H01M 4/50; H01M 6/045; H01M 50/627;
H01M 50/673;** H01M 6/04; H01M 50/102;
H01M 2300/0014

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder:
• **Evonik Operations GmbH
45128 Essen (DE)**

• **Forschungszentrum Jülich GmbH
52425 Jülich (DE)**

(72) Erfinder: **Die Erfindernennung liegt noch nicht vor**

(74) Vertreter: **Evonik Patent Association
c/o Evonik Industries AG
IP Management
Bau 1042A/PB 15
Paul-Baumann-Straße 1
45772 Marl (DE)**

(54) **VERFAHREN ZUM BETRIEB EINER VORRICHTUNG UMFASSEND MINDESTENS EINE SILIZIUM ENTHALTENDE ELEKTRISCHE PRIMÄRZELLE, EINE ELEKTROCHEMISCHE PRIMÄRZELLE, EIN SYSTEM UMFASSEND DIE VORRICHTUNG SOWIE EIN COMPUTERIMPLEMENTIERTES VERFAHREN**

(57)    Gegenstand der Erfindung ist ein Verfahren zum Betrieb einer Vorrichtung umfassend mindestens eine elektrochemische Primärzelle, eine elektrochemische Primärzelle, ein System umfassend die Vorrichtung sowie ein computerimplementiertes Verfahren und ein Computerprogrammprodukt.

EP 4 235 835 A1

**Beschreibung**

Gegenstand der Erfindung ist ein Verfahren zum Betrieb einer Vorrichtung umfassend mindestens eine elektrochemische Primärzelle, eine elektrochemische Primärzelle, ein System umfassend die Vorrichtung sowie ein computerimplementiertes Verfahren und ein Computerprogrammprodukt.

Aufgrund des zunehmenden Bedarfes an E-Mobility im Personennahverkehr durch Elektroautos, Elektrofahrräder sowie elektrisch betriebene Busse etc. als auch bei zunehmender dezentraler Stromgewinnung besteht ein enormer Bedarf an umweltverträglichen Batterien, deren Komponenten einerseits unbeschränkt verfügbar und andererseits unbeschränkt recyclebar, umweltverträglich und/oder weiter verwendbar sein sollen. Silizium ist ein auf der Erde unbegrenzt verfügbarer Rohstoff. Darüber hinaus müssen die Komponenten einer Batterie kostengünstig verfügbar sein.

Des Weiteren ist es bekannt, durch ständige Zufuhr eines Brennstoffes in Brennstoffzellen, die eine galvanische Zelle aufweisen, in Gegenwart eines Oxidationsmittels elektrische Energie zu erzeugen. Grundsätzlich ist dieses Prinzip auch für Silizium-Luft-Batterien denkbar. Das ist ein grundsätzlicher Unterschied zu üblichen, Silizium enthaltende Lithium-Ionen-Sekundärbatterien, die täglich weltweit im Einsatz sind.

Aufgabe der Erfindung war es, die Leistungsfähigkeit und Lebensdauer einer Silizium enthaltenden galvanischen Zelle, insbesondere alkalischen galvanischen Zelle, zu verbessern. Ferner soll die Leistungsdichte einer solchen Silizium enthaltenden galvanischen Zelle verbessert werden und eine hohe Anfangsspannung einstellbar sein. Eine erfindungsgemäße galvanische Zelle ist eine elektrochemische Primärzelle. Primärzellen können nach ihrem Zusammenbau einmalig entladen werden.

Des Weiteren bestand die Aufgabe ein Verfahren für den Betreib einer Silizium enthaltenden galvanischen Zelle sowie die Silizium enthaltende galvanische Zelle synonym zu Primärzelle bereitzustellen, die vorzugsweise frei von Lithium ist, wobei vorzugsweise frei von Lithium bedeutet, dass der Gehalt an Lithium im geladenen Zustand unter 1 Gew.-% in der Gesamtzusammensetzung der Primärzelle beträgt, insbesondere umfassend die Anode, die Kathode und den Elektrolyten, vorzugsweise beträgt der Gehalt an Lithium im Elektrodenmaterial der Anode im geladenen Zustand unter 0,1 Gew.-%. Vorzugsweise soll die galvanische Zelle Edukte und Reaktionsprodukte aufweisen, die aus Recyclingprozessen der Silizium-Wafer-Herstellung, wie Silizium-Sägeprozessen, stammen, Nebenprodukte sind und/oder in Recyclingprozessen weiterverwendet werden können.

Gelöst werden die Aufgaben mit dem Gegenstand des Anspruchs 1 sowie mit einer Vorrichtung umfassend die Primärzelle nach Anspruch 8, dem System umfassend eine Vorrichtung, wie ein System umfassend eine mehrzellige Batterie nach Anspruch 14 und dem computerimplementierten Verfahren nach Anspruch 7 als auch dem Computerprogrammprodukt zum Ausführen des computerimplementierten Verfahrens.

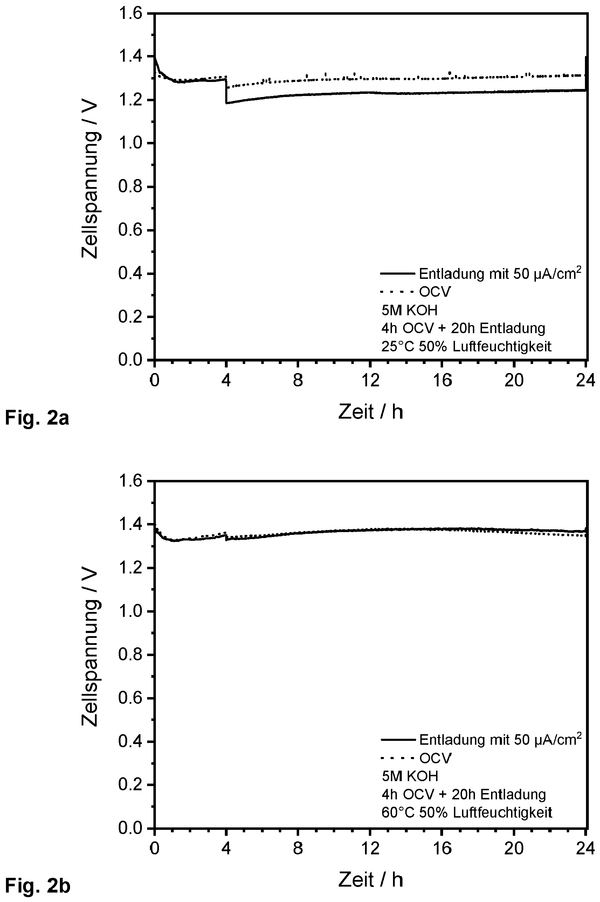

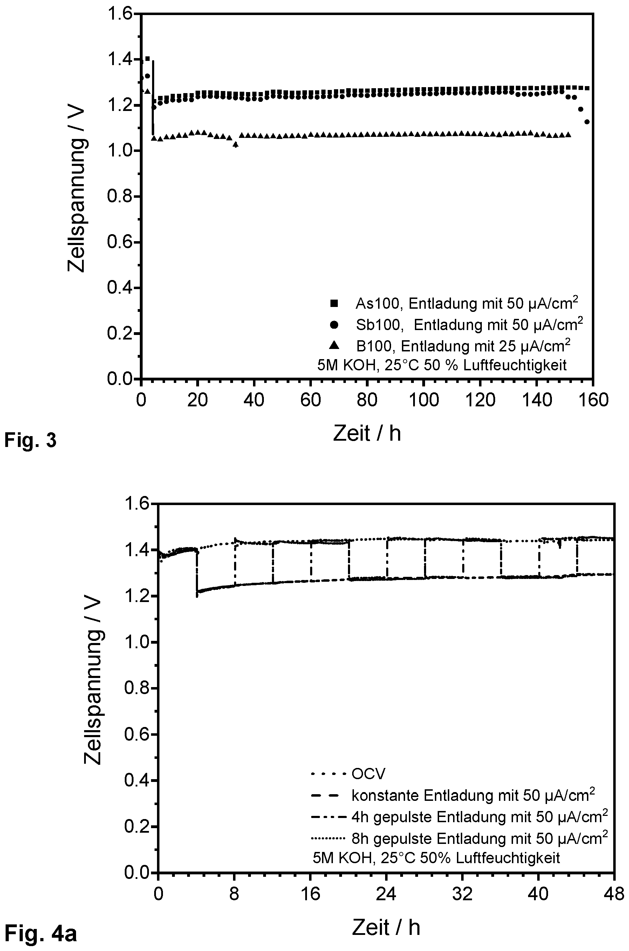

Überraschend wurde gefunden, dass die Leistungsfähigkeit einer Primärzelle während einer definierten Zeitspanne bei höherer Temperatur gegenüber der Leistungsfähigkeit bei niedriger Temperatur gesteigert werden kann. Die Leistungsfähigkeit ist definiert als die Leistung bei höherer Temperatur (in Watt bzw.Volt*Ampere) dividiert durch die Leistung bei niederer Temperatur (in Watt bzw. Volt*Ampere). Die Verbesserung der Leistungsfähigkeit wird in Prozent angegeben. So ist die Zellspannung bei sonst gleichen Bedingungen bei einer Elektrolyttemperatur von 60 °C ($Temp_1$) mit $\Delta t_1$ etwa größer gleich 2 %, insbesondere größer gleich 7 %, bevorzugt 10 % bis 20% höher gegenüber der Zellspannung bei 25 °C ($Temp_2$) mit $\Delta t_1$ (Zeitraum: $\Delta t_1 = \Delta t_2$), insbesondere über einen Zeitraum ($\Delta t_1 = \Delta t_2$) von mindestens 4 Stunden, vorzugsweise größer gleich 20 Stunden, besonders bevorzugt größer gleich 24 Stunden. So kann bspw. unter geringer Last die Zellspannung von 1,2 Volt auf 1,4 Volt erhöht werden (s. Fig. 2a und 2b). Die von der Temperatur abhängige Thermospannung kann, im Gegensatz zur Kontaktspannung empfindlich durch Dotierung (s. Fig. 3) mit Fremdatomen und strukturelle Defekte der Leitermaterialien beeinflusst werden. Dabei gilt erhöhte Elektrolyttemperatur ($Temp_1$) über $\Delta t_1$ und niedrigere Elektrolyttemperatur ($Temp_2$) über $\Delta t_2$.

Zur Erhöhung der Temperatur des Elektrolyten kann mindestens eine Temperiereinheit, bevorzugt umfassend einen oder mehrere Wärmetauscher und/oder übliche Heizelemente, Mikrowellen oder auch Infrarotquellen eingesetzt werden, die in direktem Kontakt mit dem Elektrolyten stehen oder über ein Medium bspw. eine Trennwand oder einen Wärmetauscher die Temperatur des Elektrolyten definiert erhöhen und erniedrigen können.

Bei Zugabe von Elektrolyten umfassend lineare und/oder verzweigte Polyalkylenoxid-Gruppen aufweisende Verbindungen kann die Leistungsfähigkeit um mindestens zusätzlich 2 %, vorzugsweise mindestens 15 % verbessert werden. Besonders bevorzugt kann eine Leistungssteigerung um 20 % in Bezug auf den Elektrolyten ohne diese Verbindungen erzielt werden.

Gegenstand der Erfindung ist daher ein Verfahren, insbesondere ein computerimplementiertes Verfahren, zum Betrieb einer Vorrichtung umfassend mindestens eine elektrochemische Primärzelle, wobei die elektrochemische Primärzelle eine Anode, eine Kathode und einen Hohlraum zur Aufnahme eines Elektrolyten aufweist, wobei der Hohlraum mindestens eine Öffnung zur Zuführung und/oder Entfernung des Elektrolyten aufweist, wobei die Anordnung von Anode, Kathode und Hohlraum mit der mindestens einen Öffnung zur Zuführung und/oder Entfernung des Elektrolyten dergestalt ausgebildet ist, dass zwischen Anode und Kathode ein Stromfluss durch den Elektrolyten möglich ist, wenn der Hohlraum zumindest teilweise bis vollständig mit dem Elektrolyten befüllt ist, und, wobei die Anode Silizium umfasst, insbesondere wobei der Hohlraum der Primärzelle über die mindestens eine Öffnung mit einem Reservoir, das mit Elektrolyt befüllbar ist kommuniziert, und, wobei die Vorrichtung eine Temperiereinheit zur Einstellung der Temperatur des Elektrolyten, insbesondere des Elektrolyten im Reservoir, einer Leitung zwischen Reservoir und Hohlraum und/oder im Hohlraum, aufweist,

indem das Verfahren zum Betrieb der mindestens einen Primärzelle umfasst

a) einen Entladeschritt in dem Elektrolyt im Hohlraum vorliegt und optional
b) Betrieb in Leerlaufspannung, vorzugsweise niedrigere Elektrolyttemperatur ($Temp_2$) über $\Delta t_2$, gegenüber der erhöhten Elektrolyttemperatur ($Temp_1$) über $\Delta t_1$,

wobei a) der Entladeschritt die Schritte umfasst

i) Einstellen der Temperatur des Elektrolyten, insbesondere des Elektrolyten im Reservoir, in einer Leitung zwischen Reservoir und Hohlraum und/oder im Hohlraum, auf eine definierte Temperatur, insbesondere auf eine Temperatur größer gleich 26 °C, vorzugsweise erhöhte Elektrolyttemperatur ($Temp_1$) über $\Delta t_1$,
ii) optional Entladen der mindestens einen Primärzelle.

Gleichfalls bevorzugt ist ein Verfahren, das den oder die Schritte umfasst Vorlegen, Zuführen oder Entfernen des Elektrolyten in oder aus dem Hohlraum.

Nach einer bevorzugten Ausführungsvariante kommuniziert der Hohlraum der Primärzelle über die mindestens eine Öffnung mit einem Reservoir, das mit Elektrolyt befüllbar ist oder mit Elektrolyten befüllt ist. Nach einer besonders bevorzugten Ausführungsform kann der Elektrolyt in den Hohlraum kontinuierlich, satzweise, zyklisch oder nach definierten Einspeise-Programmen zudosiert und/oder abgeführt oder durch den Hohlraum durchgeleitet werden. Die Fließgeschwindigkeit des Elektrolyten kann von 0 mL/min bis 100 mL/min, insbesondere von 0,001 bis 0,5 mL/min betragen. Bevorzugt wird der Elektrolyt mit laminarer Fließgeschwindigkeit durch den Hohlraum geleitet.

Dabei ist es besonders bevorzugt, wenn der Hohlraum eine Durchflusszelle ist. Der Vorteil des Elektrolytwechsels ist zudem, dass jeweils auch frischer Elektrolyt mit definierter Zusammensetzung in den Hohlraum eingespeist werden kann. Bevorzugt umfasst der Hohlraum Seitenwände, die den Hohlraum ausbilden, wobei mindestens eine Seitenwand die mindestens eine Öffnung des Hohlraumes aufweist. Die Öffnungen in dem Hohlraum entsprechend den Öffnungen in der mindestens einen Seitenwand die den Hohlraum ausbilden. Besonders bevorzugt wird der Hohlraum gebildet durch ein für Flüssigkeiten undurchlässiges Gehäuse. Das Gehäuse weist die mindestens eine erfindungsgemäße Öffnung auf. Das Gehäuse und der mindestens eine Separator der Anode und der Separator der Kathode sind, insbesondere nach außen, für Flüssigkeiten undurchlässig lösbar oder unlösbar aneinander fixiert, wobei durch den jeweiligen Separator der Elektrolyt im Hohlraum aus dem Gehäuse mit der Anoden und der Kathode in Kontakt treten kann. Der Hohlraum wird somit vorzugsweise durch ein Gehäuse gebildet, das Seitenwände ohne und Seitenwände mit mindestens einer Öffnung umfasst. Vorzugsweise können die Anode und/oder die Kathode in das Gehäuse eingefügt oder mittels eines Separators an mindestens einer Öffnung einer Seitenwand angefügt werden, wobei sich ein Hohlraum im Gehäuse zwischen der mindestens einen Anode und mindestens einen Kathode ausbildet. Das Gehäuse mit Anode und Kathode ist vorzugsweise, außer durch die vorhandenen Öffnungen, nach außen hermetisch abgeschlossen.

Gegenstand der Erfindung ist ein Verfahren und eine Vorrichtung umfassend mindestens eine elektrochemische Primärzelle (Silizium enthaltende galvanische Zelle synonym zu Primärzelle), die vorzugsweise frei von Lithium ist, wobei vorzugsweise frei von Lithium bedeutet, dass der Gehalt an Lithium im geladenen Zustand unter 1 Gew.-% in der Gesamtzusammensetzung der Primärzelle beträgt, insbesondere umfassend die Anode, die Kathode und den Elektrolyten, vorzugsweise beträgt der Gehalt an Lithium im Elektrodenmaterial der Anode im geladenen Zustand unter 0,1 Gew.-%. Vorzugsweise soll die galvanische Zelle Edukte und Reaktionsprodukte aufweisen, die aus Recyclingprozessen der Silizium-Wafer-Herstellung stammen, Nebenprodukte sind und/oder aus alternativen Recyclingprozessen des Siliziums stammen und somit weiterverwendet werden können. Die $CO_2$-Reduktion durch das Recycling von Silizium-Resten, Nebenprodukten, Sägeresten oder dem Recycling defekter, gebrauchter oder sonstiger Silizium-Wafer ist erheblich. Vorteilhaft können auch die Silizium-Wafer nach ihrer Nutzung z.B. als Photvoltaikzelle recycelt werden indem man sie vermahlen, bspw. in Kugelmühlen auf Partikel mit einer Dimension von ca. 0,001 mm, insbesondere ca. 0,01 bis 1 mm.

Das Wasser zur Herstellung der Elektrolytzusammensetzung, insbesondere ausgewählt aus protischer Flüssigkeit zur Herstellung der Elektrolytzusammensetzung, weist vorzugsweise bei 25 °C, eine Leitfähigkeit von größer gleich 0,055 $\mu$S/cm, weiter bevorzugt von größer gleich 0,5 $\mu$S/cm auf, bevorzugt bei größer gleich 0,25 S/cm und vorzugsweise kleiner 250 $\mu$S/cm bei 25 °C. Bei ca. 100 °C kann die Leitfähigkeit des Wassers, vorzugsweise vollentsalztem Wasser (VE-Wasser), bis zu 3 $\mu$S/cm betragen, bei 60 °C bis zu 2 $\mu$S/cm. In der Elektrolytzusammensetzung ist die Leitfähigkeit erheblich höher und liegt vorzugsweise bei größer gleich 1 mS/cm bei 25 °C, bevorzugt bei 0,5 S/cm bei 25 °C. Der Gehalt an Metallen des Wassers zur Herstellung der Elektrolytzusammensetzung beträgt vorzugsweise

kleiner gleich 100 $\mu$g/l, bevorzugt kleiner gleich 50 $\mu$g/l (analytisch bestimmt mittels ICP-MS).

Nach einer besonders bevorzugten Ausführungsform kann die protische Flüssigkeit, die kein Elektrolyt ist, umfassen, insbesondere bestehen aus, Wasser, mindestens einem Alkanol mit 1 bis 6 C-Atomen und ca. 100 Atom-ppm Polyalkenyloxid mit einer terminalen Hydroxy oder CarbonsäureGruppe. Der pH-Wert der protischen Flüssigkeit beträgt vorzugsweise pH = 7 +/- 0,5, insbesondere pH 6,9 +/- 0,2. Das Zuführen und/oder Entfernen der protischen Flüssigkeit kann mittels eines pH-Sensors und Überwachung des pH-Wertes gesteuert werden. Der pH-Wert wird vorteilhaft elektronisch mittels eines pH-Messsensors überwacht. Auf diese Weise kann ein Austausch oder eine Verdünnung der protischen Flüssigkeit angezeigt werden, der manuell oder automatisiert erfolgen kann.

Nach einer weiteren Ausführungsform umfasst das Verfahren zum Betrieb der mindestens einen Primärzelle a) mindestens einen Entladeschritt und optional b) einen Betrieb in Leerlaufspannung, wobei a) der Entladeschritt die Schritte umfasst

i) optional Vorlegen von Elektrolyt in dem Reservoir, optional Einstellen der Temperatur des Elektrolyten auf eine definierte Temperatur im Reservoir und optional in der Leitung zwischen Reservoir und Hohlraum, insbesondere auf eine Temperatur größer gleich 26 °C, insbesondere als $Temp_1$, und
ii) Vorlegen von Elektrolyt, insbesondere eines wässrigen, alkalischen Elektrolyten, im Hohlraum, optional Einstellen der Temperatur des Elektrolyten auf eine definierte Temperatur, insbesondere auf eine Temperatur größer gleich 26 °C, insbesondere als $Temp_1$,
iii) optional Entladen der mindestens einen Primärzelle, und wobei

- ein Einstellen der Temperatur des Elektrolyten auf eine definierte Temperatur i) im Reservoir, in einer Leitung zwischen Reservoir und Hohlraum und/oder ii) im Hohlraum erfolgt, insbesondere auf eine Temperatur größer gleich 26 °C , insbesondere als $Temp_1$,

Besonders bevorzugt wird die Temperatur in der Leitung mittels eines Wärmetauschers zwischen Reservoir und Hohlraum, insbesondere eines Rohr-in-Rohr Wärmetauschers eingestellt.

Gleichfalls kann das Verfahren umfassen a) mindestens einen Entladeschritt und optional b) einen Betrieb in Leerlaufspannung, wobei a) der Entladeschritt oder die Entladeschritte den Schritt umfassen Einstellen der Temperatur des Elektrolyten, insbesondere eines wässrigen, alkalischen Elektrolyten, im Hohlraum und optional im Reservoir auf eine definierte Temperatur, insbesondere auf eine Temperatur größer gleich 26 °C, und optional Entladen der mindestens einen Primärzelle.

Ferner kann das Verfahren umfassen a) mindestens einen Entladeschritt und optional b) einen Betrieb in Leerlaufspannung, wobei a) der Entladeschritt oder die Entladeschritte den Schritt umfassen Einstellen der Temperatur des Elektrolyten, insbesondere eines wässrigen, alkalischen Elektrolyten, im Hohlraum und optional im Reservoir auf eine definierte Temperatur, insbesondere auf eine Temperatur größer gleich 26 °C und Einstellen einer Fließgeschwindigkeit des Elektrolyten auf 0,001 mL/min bis 100 mL/min, und optional Entladen der mindestens einen Primärzelle. Gleichfalls kann der Entladeschritt auch bei tieferen Temperaturen erfolgen, dies ist sinnvoll, um die Korrosion zu minimieren.

Vorzugsweise erfolgt b) der Betrieb in Leerlaufspannung, vorzugsweise i) bei niedrigerer Elektrolyttemperatur ($Temp_2$) über $\Delta t_2$, gegenüber der erhöhten Elektrolyttemperatur ($Temp_1$) über eine Zeitspanne $\Delta t_1$, und vorzugsweise ii) mit protischer Flüssigkeit, die kein Elektrolyt ist, im Hohlraum oder iii) mit entleertem Hohlraum. In Alternativen kann auch die protische Flüssigkeit eine niedrigere Temperatur aufweisen, die ebenfalls ($Temp_2$) über eine Zeitspanne $\Delta t_2$ entsprechen kann.

Dabei ist die Leistung $Temp_1 * \Delta t_1 > Temp_2 * \Delta t_2$ mit $\Delta t_1 = \Delta t_2$ und $Temp_1 > Temp_2$. Die Differenz ($\Delta T = |Temp_1 - Temp_2|$ von $Temp_1$ zu $Temp_2$ beträgt mindestens 3°C vorzugsweise mindestens 10 °C.

Als Temperiereinheit kann bevorzugt mindestens ein Wärmetauscher in der Vorrichtung umfassend mindestens eine Primärzelle, in dem System und/oder außerhalb an Wärme abgebenden Komponenten angeordnet sein, wobei der Wärmetauscher dazu dient, die Abwärme von anderen Komponenten der Vorrichtung, wie Umrichter und/oder wärmeabgebenden Komponenten in einem Fahrzeug umfassend einen Akkumulator, zur Temperierung des Elektrolyten oder der protischen Flüssigkeit, die kein Elektrolyt ist zu verwenden.

Dies kann beispielsweise erfolgen, indem der Elektrolyt mittels eines Wärmetauschers, wie eines Rohr-in-Rohr-Wärmetauschers gekühlt oder geheizt werden kann. Die Kühlung kann bspw. durch einen Wärmetauscher innen an der Karosserie und/oder Chassis eines Fahrzeuges vorgesehen werden. Wird das erfindungsgemäße System oder die Primärzelle als Range-Extender-System in Kombination mit einem Akkumulator in einem Fahrzeug genutzt, kann die Abwärme der Hauptbatterie und des Umrichters für die Temperierung des Elektrolyten und der protischen Flüssigkeit, die kein Elektrolyt ist genutzt werden. So kann beispielsweise eine Passivierungsphase der Anode während des Betriebs in Leerlaufspannung mit protischer Flüssigkeit, vorzugsweise Wasser erfolgen, insbesondere kann während der Passivierungsphase die Temperatur in der Zelle z.B. auf 60 °C gehalten werden.

Nach einer weiteren bevorzugten Alternative umfasst a) der Entladeschritt iii) Entladen der mindestens einen Primärzelle, indem ein elektrischer Verbraucher an die Kathode und Anode angeschlossen wird. Als Verbraucher gelten elektrisch betriebene Vorrichtungen oder auch Akkumulatoren oder Batterien zur Zwischenspeicherung gewonnener elektrischer Energie.

Die Temperatur des Elektrolyten wird vorzugsweise auf eine Temperatur größer gleich 27°C bis unter 95°C eingestellt, insbesondere wird die Temperatur des Elektrolyten auf eine Temperatur größer gleich 40 °C und insbesondere auf kleiner gleich 100 °C, vorzugsweise wird die Temperatur des Elektrolyten auf eine Temperatur größer 50 °C, besonders bevorzugt auf größer gleich 60 °C eingestellt. Dabei kann der Elektrolyt nach einem definierten Programm oder Muster mit einer vorgenannten Fließgeschwindigkeit in den Hohlraum und optional in das Reservoir einfließen, aus dem Reservoir herausfließen oder das Reservoir durchfließen. Ferner kann der Elektrolyt im Hohlraum durch Wasser, wie destilliertes oder vollentsalztes Wasser optional enthaltend Additive ersetzt werden. Das Wasser kann optional in einem zweiten Reservoir vorgehalten und daraus der mindestens einen Öffnung zugeführt werden. Nach einer Ausführungsform kann die Primärzelle jeweils mindestens eine Öffnung und optional eine Leitung für die Zuführung und Entfernen des Wassers auf dem zweiten Reservoir aufweisen.

Vorzugsweise erfolgt der Betrieb der mindestens einen Primärzelle im erfindungsgemäßen Verfahren in b) Leerlaufspannung, indem i) der Elektrolyt in dem Reservoir, in einer Leitung und/oder im Hohlraum auf eine Temperatur kleiner 26 °C, insbesondere als $Temp_2$, eingestellt wird. Nach einer Alternative kann der Elektrolyt zusätzlich im Hohlraum gegen eine protische Flüssigkeit, die kein Elektrolyt ist, bevorzugt Wasser, getauscht werden, indem der Elektrolyt mit einer definierten Fließgeschwindigkeit abgepumpt oder abgelassen wird und die protische Flüssigkeit, insbesondere Wasser, in den Hohlraum, insbesondere über eine Leitung, eingepumpt wird oder einfließen kann. Die protische Flüssigkeit, insbesondere das Wasser, im Hohlraum und optional in einem zweiten Reservoir zur Zuführung von protischer Flüssigkeit, insbesondere Wasser, jeweils optional mit mindestens einem Additiv, kann vorzugsweise eine Temperatur kleiner gleich 30 °C, insbesondere kleiner gleich 27 °C, bevorzugt kleiner gleich 25 °C aufweisen, insbesondere jeweils als $Temp_2$.

Der Betrieb in Leerlaufspannung, synonym zu offener Zellspannung (OCV), erfolgt vorzugsweise, indem der Stromfluss zwischen Primärzelle und elektrischem Verbraucher unterbrochen ist.

Im Betrieb b) in Leerlaufspannung soll der Hohlraum, für eine Elektrolytwechselzeitspanne kleiner gleich 60 Minuten, insbesondere kleiner gleich 10 Minuten, besonders bevorzugt kleiner gleich 1 Minute, entleert bleiben. Vorzugsweise liegt im Betrieb in Leerlaufspannung im Hohlraum protische Flüssigkeit vor und nur beim Vorgang des Elektrolytwechsels ist der Hohlraum für die vorgenannten Elektrolytwechselzeitspanne entleert.

Der Betrieb in Leerlaufspannung kann erfolgen, indem der Stromfluss der Stromentnahme unterbrochen ist oder indem die mindestens eine Primärzelle in Leerlaufspannung mit den folgenden Schritten betrieben wird i) Entfernen des Elektrolyten aus dem Hohlraum, insbesondere in ein erstes Reservoir, und optional ii) Zuführen einer protischen Flüssigkeit, die kein Elektrolyt ist, in den Hohlraum, insbesondere aus einem zweiten Reservoir. Ferner ist es bevorzugt, wenn der Betrieb der Primärzelle in Leerlaufspannung umfasst ii) Zuführen einer protischen Flüssigkeit in den Hohlraum, die kein Elektrolyt ist, insbesondere weist die protische Flüssigkeit einen pH-Wert von 5,5 bis 8, insbesondere um pH 7 +/- 0,5, auf und ist bevorzugt wässrig. Dabei kann das Zuführen der protischen Flüssigkeit in den Hohlraum satzweise, kontinuierlich, diskontinuierlich und/oder periodisch erfolgen.

Gegenstand der Erfindung ist auch ein Verfahren zum Betrieb einer Vorrichtung umfassend mindestens eine Primärzelle oder ein System umfassend eine Stromentnahme. Das erfindungsgemäße Verfahren ist besonders bevorzugt ein computerimplementiertes Verfahren, d.h. ein von einem Computer ausgeführtes Verfahren.

Nach einer besonders bevorzugten Alternative kann das Verfahren die Ermittlung des Innenwiderstandes der mindestens einen Silizium-Primärzelle oder eines Systems von größer gleich zwei Primärzellen, insbesondere bis zu 15.000 Primärzellen, besonders bevorzugt eines Silizium-Primärzellenstrangs umfassen, wobei das Verfahren zur Ermittlung des Innenwiderstandes die Schritte umfasst, und insbesondere durchgeführt wird im Entladeschritt,

1. Messen einer Spannung der Primärzelle zu einer ersten Zeit, zu der die Primärzelle nicht zu einer elektronischen Last zugeschaltet ist - Messung von Uo,

2. Zuschalten einer elektronischen Last, welches zu einem Stromfluss I1 führt.

3. Messung der Spannung U1,

4. Berechnen des Kurzschlussstromes Ik aus diesen Größen und Berechnung des Ri aus Uo/Ik. Ik=(Uo)*Ikl1/(Uo-Ukl1), optional

5. dynamische und/oder kontinuierliche Wiederholung der Berechnung und optional Abschätzen der Restkapazität.

Mit der Maßgabe, dass $Temp_1$ einer höheren Temperatur als $Temp_2$ entspricht, d.h.

$Temp_1 > Temp_2$. Vorzugsweise beträgt die Differenz ($\Delta T = |Temp_1 - Temp_2|$ von $Temp_1$ zu $Temp_2$ mindestens 5°C, vorzugsweise mindestens 10°C.

Weiter bevorzugt ist ein Verfahren in dem der Innenwiderstand ermittelt und/oder angepasst, der mindestens einen Silizium-Primärzelle oder eines Systems von größer gleich zwei Primärzellen, insbesondere bis zu 15.000 Primärzellen, besonders bevorzugt eines Silizium-Primärzellenstrangs wird, wobei das Verfahren die Schritte umfasst, und insbesondere durchgeführt wird im Entladeschritt,

1. Messen einer Spannung der Primärzelle zu einer ersten Zeit und einer $Temp_1$ und/oder $Temp_2$, zu der die Primärzelle nicht zu einer elektronischen Last zugeschaltet ist Messung von Uo,
2. Zuschalten einer elektronischen Last, welches zu einem Stromfluss I1 führt.
3. Messung der Spannung U1,
4. Berechnen des Kurzschlusstromes Ik aus diesen Größen und Berechnung des Ri aus Uo/Ik. Ik=(Uo)*IkI1/(Uo-UkI1), optional
5. dynamische und/oder kontinuierliche Wiederholung der Berechnung und optional Abschätzen der Restkapazität.

Ferner kann das Verfahren zur Ermittlung und/oder Anpassung des Innenwiderstandes die Schritte umfassen,

1. Messen einer Spannung der Primärzelle zu einer ersten Zeit und einer $Temp_2$ zu der die Primärzelle nicht zu einer elektronischen Last zugeschaltet ist - Messung von Uo,
2. Zuschalten einer elektronischen Last, welches zu einem Stromfluss I1 führt.
3. Messung der Spannung U1,
4. Berechnen des Kurzschlussstromes Ik aus diesen Größen und Berechnung des Ri aus Uo/Ik. Ik=(Uo)*IkI1/(Uo-UkI1), optional
5. dynamische und/oder kontinuierliche Wiederholung der Berechnung und optional Abschätzen der Restkapazität, und optional
6. Messen einer Spannung der Primärzelle zu einer ersten Zeit und einer $Temp_1$ zu der die Primärzelle nicht zu einer elektronischen Last zugeschaltet ist Messung von Uo,
7. Zuschalten einer elektronischen Last, welches zu einem Stromfluss I1 führt, und optional
8. Messung der Spannung U1,
9. Berechnen des Kurzschlussstromes Ik aus diesen Größen und Berechnung des Ri aus Uo/Ik. Ik=(Uo)*IkI1/(Uo-UkI1), optional
10. dynamische und/oder kontinuierliche Wiederholung der Berechnung und optional Abschätzen der Restkapazität.

Durch die Messung des Innenwiderstandes bei $Temp_2$ (niedrigere Temp.) und $Temp_1$ (höhere Temp.) kann die optimale Temperatur berechnet werden, die in dem Verfahren eingestellt wird, um die Spannung U1 und/oder den Stromfluss I1 optimal an die elektronische Last anzupassen. Als elektronische Last kann u.a. ein Lithium-Akkumulator angeschlossen werden, der von der Primärzelle oder dem System von Primärzellen aufgeladen wird.

Das Verfahren zur Ermittlung des Innenwiderstandes wird vorzugsweise durchgeführt in a) einen Entladeschritt in dem der Elektrolyt im Hohlraum vorliegt und/oder im b) Betrieb der Primärzelle in Leerlaufspannung, wenn nicht protische Flüssigkeit im Hohlraum vorliegt und zwischen Anode und Kathode ein Stromfluss durch die protische Flüssigkeit möglich ist. oder ein Widerstand gemessen werden kann, der von dem Widerstand des vollständig entleerten Hohlraumes abweicht.

Das Verfahren kann auch die Schritte umfassen 1. Paralleles Messen der Spannung von Primärzellen oder Gruppen von Primärzellen oder von Primärzellen eines Systems zu einer ersten Zeit, zu der die Primärzellen nicht zu einer elektronischen Last zugeschaltet sind, Messung von Uo, sowie Durchführen der Schritte 2 bis 5.

Ferner ist es bevorzugt, wenn die Schritte 1 bis 5 während des Entladevorgangs der Silizium-Primärzelle, des Systems umfassend Primärzellen oder eines Silizium-Primärzellenstrangs durchgeführt werden.

Vorzugsweise umfasst das Computerprogrammprodukt Befehle, die bei der Ausführung des Programms durch einen Computer diesen veranlassen, das Verfahren zur Ermittlung des Innenwiderstandes der mindestens einen Silizium-Primärzelle oder eines Systems von größer gleich zwei Primärzellen, insbesondere bis zu 15.000 Primärzellen, besonders bevorzugt einen Silizium-Primärzellenstrang umfassen, auszuführen.

Gleichfalls Gegenstand der Erfindung ist eine Vorrichtung umfassend mindestens eine elektrochemische Primärzelle, insbesondere mindestens eine hermetisch abgeschlossene Primärzelle und/oder eine hermetisch abgeschlossene Vorrichtung, wobei die Primärzelle aufweist eine Anode, eine Kathode, insbesondere eine Luftkathode, die nicht hermetisch abgeschlossen ist, einen Hohlraum zur Aufnahme eines Elektrolyten und der Hohlraum mindestens eine Öffnung zur Zuführung und/oder Entfernung des Elektrolyten in den Hohlraum aufweist, wobei die Anordnung von Anode, Kathode und Hohlraum mit der mindestens einen Öffnung zur Zuführung und/oder Entfernung des Elektrolyten dergestalt ist, dass zwischen Anode und Kathode ein Stromfluss durch den Elektrolyten möglich ist, wenn der Hohlraum zumindest teilweise bis vollständig mit dem Elektrolyten befüllt ist, und wobei die Anode als Anodenmaterial Silizium umfasst, wobei die Vorrichtung eine Temperiereinheit zur Einstellung der Temperatur des für den Betrieb der Primärzelle einzufüllenden Elektrolyten aufweist.

Besonders bevorzugt umfasst die Anode als Anodenmaterial Silizium, insbesondere Silizium, das in Form von Silizium-Partikeln vorliegt. Die Silizium-Partikel können amorph, kristallin oder polykristallin vorliegen. Besonders bevorzugt sind kristalline Silizium-Partikel oder Silizium-Wafer oder Bruchstücke davon oder Partikel aus diesen Wafern, insbesondere die 111-Ebenen aufweisen. Gleichfalls können Silizium-Partikel umfassen Silizium-Primärpartikel mit einer Partikelgröße zwischen 1 nm bis 30 000 nm, die vorzugsweise im Wesentlichen amorph sind. Die vorgenannten Silizium-Partikel können vorzugsweise als gesinterter Formkörper, insbesondere als gesinterte Scheibe vorliegen. Die gesinterte Scheibe ist vorzugsweise porös. Gleichfalls können Silizium-Partikel aus der Waferherstellung oder Waferbearbeitung sowie die genutzen Sägesuspensionen und/oder der Wafer-Ausschuss, die bspw. über Drahtsägeverfahren erhältlich sind, als Anodenmaterial eingesetzt werden.

Somit kann die Anode als Anodenmaterial Silizium umfassen, das ausgewählt ist aus Silizium-Partikeln, insbesondere von 1 nm bis 10 cm. Nach einer bevorzugten Ausführungsform können Sägereste aus der Silizium-Wafer-Herstellung, wie Wafern zur Herstellung von Halbleitern oder auch Wafer oder Partikel von Solarsilizium-Wafern eingesetzt werden. Alternativ sind die Silizium-Primärpartikel im Wesentlichen amorph. Vorzugsweise können die Silizium-Partikel in Form von Agglomeraten von Silizium-Primärpartikeln, Aggregaten von Silizium-Primärpartikeln oder Gemischen dieser Agglomerate und Aggregate, wobei die Agglomerate und/oder Aggregate eine Größe von 100 bis 30 000 nm aufweisen. Die Primärpartikel können Partikel mit einer Primärpartikelgröße von 10 bis 90 nm aufweisen, im Fall der Sägereste bis 30 000 nm.

Dabei ist es weiter besonders bevorzugt, wenn die Anode, insbesondere das Anodenmaterial, insbesondere im geladenen Zustand der Primärzelle, kein Lithium umfasst, vorzugsweise keine Lithium-Ionen, im Konzentrationsbereich von größer gleich 10 000 Gew-ppm, größer gleich 100 Gew.-ppm aufweist. Besonders bevorzugt weist das Anodenmaterial kleiner 10 Gew.-ppm LithiumAtome auf. Vorzugsweise weist das Anodenmaterial kleiner $10^{21}$ Lithium-Atome/cm$^3$ im Silizium-Partikel auf. Des Weiteren ist es bevorzugt, wenn im Elektrolyten die Konzentration an Lithium, insbesondere Lithium-Ionen, kleiner gleich 10 000 Gew.-ppm, insbesondere kleiner gleich 1000 Gew.-ppm, bevorzugt kleiner gleich 100 Gew.-ppm beträgt.

Vorzugsweise weist das Anodenmaterial kleiner $10^{21}$ Lithium-Atome/cm$^3$ in der Silizium-Maxtrix auf. Des Weiteren ist es bevorzugt, wenn im Elektrolyten die Konzentration an Lithium, insbesondere Lithium-Ionen, kleiner gleich 1000 Gew.-ppm, insbesondere kleiner gleich 100 Gew.-ppm, bevorzugt kleiner gleich 10 Gew.-ppm beträgt.

Die Vorrichtung und/oder die mindestens eine Primärzelle können hermetisch abgeschlossen oder eingekapselt von der Umgebung vorliegen. Als Material zum Einkapseln oder als Material des hermetisch abgeschlossenen Gehäuses der mindestens einen Primärzelle oder der Vorrichtung, kann ein inerter Kunststoff, wie PP, PE oder COC als auch ein Hybridmaterial umfassend einen Kunststoff und anorganische Partikel als auch eine metallische Legierung, dienen.

Des Weiteren weist die Vorrichtung, insbesondere mit mindestens einem Wärmetauscher und/oder mindestens einem Heizelement als aktive Wärmequelle zur Einstellung der Temperatur, insbesondere eines Temperaturprofils des Elektrolyten auf. Daher weist die Vorrichtung bevorzugt eine oder mehrere Temperiereinheiten, die aktive als auch passive Wärmequellen umfassen können, zur Einstellung der Temperatur auf. Die Einstellung eines spezifischen Temperaturprofils kann zur Anwendung kommen, wenn bspw. Sekundärzellen, wie Lithium-Ionen Akkus von der Primärzelle oder dem System geladen werden sollen oder aus dem Elektrolyten gelöste Komponenten abgetrennt und/oder ausgefällt werden sollen.

Nach einer weiteren besonders bevorzugten Ausführungsform kann der Hohlraum mindestens eine Öffnung zur Zuführung und/oder Entfernung des Elektrolyten aufweisen, wobei der Hohlraum der Primärzelle über die mindestens eine Öffnung mit einem Reservoir, das mit Elektrolyt befüllbar ist, kommuniziert. Besonders bevorzugt ist mindestens eine Öffnung zur Zuführung und mindestens eine Öffnung zur Entfernung des Elektrolyten im Hohlraum vorgesehen. Des Weiteren sind die vorgenannten Öffnungen vorzugsweise über je eine Leitung mit dem Reservoir verbunden. In einer bevorzugten Ausführungsform kann mindestens ein Teil der jeweiligen Leitung einem inneren oder äußeren Rohrs eines Rohr-in-Rohr Wärmetauschers entsprechen, der umfasst ein inneres Rohr und ein äußeres Rohr, welches das innere Rohr umschließt, wobei der Wärmetauscher ein Teil der Temperiereinheit ist.

Ferner ist es bevorzugt, wenn der Hohlraum in der Primärzelle eine erste und eine zweite Öffnung aufweist, wobei durch die erste Öffnung ein Elektrolyt in den Hohlraum eingeführt und aus der zweiten Öffnung entfernbar ist. Bevorzugt ist es, wenn der Hohlraum in der Primärzelle über eine Leitung aus dem Reservoir durch die erste Öffnung mit Elektrolyt befüllbar ist und über die zweite Leitung aus dem Hohlraum durch die zweite Öffnung aus dem Hohlraum in das Reservoir entfernbar ist.

Ein Heizelement und/oder ein Wärmetauscher kann an mindestens einer der Leitungen oder dem Reservoir zugeordnet sein. Eine Kombination von mindestens einem Wärmetauscher und optional mindestens einem Heizelement ist besonders bevorzugt. Dabei ist es besonders bevorzugt, wenn der Hohlraum in der mindestens einen Primärzelle eine erste und optional eine zweite Öffnung aufweist, wobei durch die erste Öffnung ein Elektrolyt in den Hohlraum eingeführt und entfernbar ist oder durch die erste Öffnung ein Elektrolyt in den Hohlraum eingeführt und durch die zweite Öffnung entfernbar ist, wobei vorzugsweise die erste und zweite Öffnung jeweils unabhängig über eine Leitung mit dem Reservoir verbunden ist. Bevorzugt kann jede Primärzelle jeweils unabhängig mit je einem Reservoir oder jede Primärzelle in dem System mit einem gemeinsamen Reservoir in dem System wie vorstehend genannt verbunden sein.

Die Temperiereinheit umfasst vorzugsweise mindestens einen Wärmetauscher und/oder mindestens ein Heizmittel und optional mindestens einen Temperatursensor bzw. Temperaturfühler. Ferner kann die Temperiereinheit eine elektronische Steuereinheit, insbesondere eine digitale Steuerung zur Steuerung des mindestens einen Wärmetauschers und/oder des mindestens einen Heizmittels und optional eines oder mehrere Temperatursensoren, umfassen, die in einem computerimplementierten Verfahren, d.h. in einem von einem Computer ausgeführten Verfahren angesteuert werden kann. Das Heizmittel umfasst vorzugsweise eine elektrische Widerstands-Heizung, Latentwärmespeicher, induktives Heizmittel, wie elektrischen Heizdraht, heizbare Keramik, eine elektrische Infrarot-Heizung und/oder eine Mikrowellen-Heizung.

Der oder die Temperatursensoren können umfassen Widerstandsmesser, Schwingquartz oder andere dem Fachmann bekannte Temperatursensoren. Besonders bevorzugt sind Temperatursensoren, insbesondere Temperatursensoren mit elektrischer Signalweiterleitung, bevorzugt mit Prozessanschluss, der oder die ausgewählt sind aus Temperatursensoren umfassend eine Bimetall-Spirale, Temperatursensor mit Widerstandsmessung bspw. gemäß DIN EN 60751 oder Temperatursensor umfassend Thermoelement (Verhalten gemäß Seebeck-Effekt) und/oder Schwingquarz. Wärmetauscher kommen in Betracht Rohr-in-Rohr-Wärmetauscher, die für den Elektrolytwechsel und/oder Zuführung oder Entfernung der protischen Flüssigkeit beim Betrieb in Leerlaufspannung der jeweiligen Primärzelle genutzt werden können. Zur Temperierung mittels Wärmetauscher können grundsätzlich alle Wärme- oder Kältequellen vorzugsweise in einem Fahrzeug genutzt werden. Die Vorrichtung kann 1 bis 200 Temperatursensoren umfassen, insbesondere umfasst die Vorrichtung, bevorzugt die Temperiereinheiten 2 bis 200, weiter bevorzugt 3 bis 300 Temperatursensoren.

Der mindestens eine Temperatursensor, insbesondere ein Temperatursensor mit elektrischer Signalweiterleitung, zur Bestimmung der Temperatur des Elektrolyten im Hohlraum, kann bevorzugt in der Leitung der ersten Öffnung, in der Leitung der zweiten Öffnung und/oder im Reservoir angeordnet sein.

Die Temperiereinheit, umfassend einen Wärmetauscher und/oder Heizmittel, kann dem Hohlraum, einer der Leitungen und/oder dem Reservoir zugeordnet sein. Vorzugsweise kann das Heizmittel a) im Hohlraum und/oder im Reservoir angeordnet sein oder b) in einer Leitung und/oder außen an einer Leitung angeordnet sein. Der mindestens eine Wärmetauscher kann beispielsweise über Abwärme mindestens eines Umrichters mit Wärme gespeist werden, die vorzugsweise über einen zweiten Wärmetauscher an den Elektrolyten abgegeben wird. Der zweite Wärmetauscher kann dem Hohlraum, einem Reservoir und/oder einer Leitung zugeordnet sein. Gegenstand der Erfindung ist auch eine Vorrichtung umfassend mindestens einen Umrichter, mindestens ein Wärmetauscher, Leitungen Hohlraum und Reservoir(e) verbinden.

Nach einer besonders bevorzugten Ausführungsform wird ein System beansprucht, das umfasst eine vorgenannte Vorrichtung, wobei die Vorrichtung größer gleich 2 Primärzellen umfasst, insbesondere bis 15.000 Primärzellen, bevorzugt bis 1.000 Primärzellen. Ferner ist Gegenstand der Erfindung eine mehrzellige Batterie oder ein System umfassend eine mehrzellige Batterie, wobei die Batterie mindestens zwei bis 15.000 mit einander verbundene Primärzellen umfasst, vorzugsweise sind zwei bis 300 miteinander verbundene Primärzellen als ein Modul in Serie geschaltet. Ferner ist es bevorzugt, wenn zwei oder mehr Module parallel geschaltet sind bspw. 2 bis 500. Die Batterie wird definiert nach der DIN-Norm 40729.

Des Weiteren wird ein System zur Datenverarbeitung umfassend Mittel zur Ausführung des Verfahrens beansprucht, das insbesondere für den Betrieb eines Systems ausgebildet ist. Ferner wird ein Computerprogrammprodukt beansprucht, das Befehle aufweist, die bei der Ausführung des Programms durch einen Computer diesen veranlasst, das erfindungsgemäße Verfahren und/oder das Verfahren für den Betrieb einer Vorrichtung oder ein Verfahren für den Betrieb eines Systems auszuführen. Das erfindungsgemäße Verfahren ist vorzugsweise ein computerimplementiertes Verfahren.

Zudem ist Gegenstand ein Computer-lesbares Medium, umfassend Befehle, die bei der Ausführung durch einen Computer diesen veranlassen, das erfindungsgemäße Verfahren auszuführen und/oder das Verfahren für den Betrieb einer Vorrichtung oder für den Betrieb eines Systems auszuführen.

Als wässrigen Elektrolyten kann eine wässrige, alkalische Elektrolytzusammensetzung eingesetzt werden, die umfassen kann mindestens eine lineare oder verzweigte Polyalkylenoxid-Gruppen aufweisende Verbindung mit mindestens drei Alkylenoxid-Gruppen in der Verbindung oder Gemische von mindestens zwei dieser Verbindungen, wobei die Alkylenoxid-Gruppen in der Polyalkylenoxid-Gruppen aufweisenden Verbindung ausgewählt sind aus Alkylenoxid-Gruppen mit 2 bis 6 C-Atomen je Alkylenoxid-Gruppe, bevorzugt mit 2 bis 4 C-Atomen je Alkylenoxid-Gruppe, und, wobei mindestens eine terminale Gruppe bevorzugt alle terminalen Gruppen der Polyalkylenoxid-Gruppen aufweisenden Verbindung ausgewählt ist aus Hydroxy-Gruppen, Alkyl-Gruppen, Alkoxy-Gruppen, Alkenyl-Gruppen, Alkenyloxid-Gruppen, Carbonsäureester-Gruppen, insbesondere olefinischen Carbonsäure-ester-Gruppen, Carbonsäureamid-Gruppen, aromatischen-Gruppen, insbesondere Alkyl-substituierten aromatischen Gruppen, und/oder Gruppen enthaltend cyclische-Ether. Besonders bevorzugt sind lineare oder verzweigte Polyalkylenoxid-Gruppen aufweisende Verbindungen mit mindestens drei bis 200 Alkylenoxid-Gruppen in der Verbindung oder Gemische von mindestens zwei dieser Verbindungen, insbesondere mit 3 bis 100 Alkylenoxid-Gruppen, besonders bevorzugt mit drei bis 100 Alkylenoxid-Gruppen, weiter bevorzugt mit 3 bis 50 Alkylenoxid-Gruppen, vorzugsweise mit 3 bis 25 Alkylenoxid-Gruppen. Dabei ist es weiter bevorzugt, wenn die Alkylenoxid-Gruppen aus Ethylenoxid und Propylenoxid ausgewählt sind.

Definitionsgemäß umfassen Polyalkylenoxid-Gruppen aufweisende Verbindungen: -(O-Alkylen)$_n$-OH, -(O-Alkylen)$_n$-COOH, -(O-Alkylen)$_n$-(C=O)NHR, -(O-Alkylen)$_n$-(C=O)NR$_2$, mit R = Kohlenwasserstoff oder Polyalkylenoxid, -(O-Alkylen)$_n$-O-Alkyl, -(O-Alkylen)$_n$-O-Alkenyl, -(O-Alkylen)$_n$-O-(C=O)-Alkyl, -(O-Alkylen)$_n$-O-(C=O)-Alkenyl, -(O-Alkylen)$_n$-O-(C=O)-Aromat-Alkyl jeweils unabhängig mit n größer gleich 2, insbesondere mit n = 5 bis 100, insbesondere n = 5 bis 50, bevorzugt n = 5 bis 25. Alkylen ist besonders bevorzugt bivalentes Ethylen (-CH$_2$CH$_2$-), insbesondere als Ethylenoxid-Gruppe, oder bivalentes Propylen, insbesondere in Propylenoxid-Gruppen (-CH2(CH3CH)- und -(CH2)3-).

Bevorzugte Beispiele können symmetrische Verbindungen umfassen, aber sind nicht beschränkt auf die nachfolgend genannten Polyalkylenoxid-Gruppen aufweisenden Verbindungen: H-(O-Alkylen)$_n$-OH, Alkyl-(O-Alkylen)$_n$-O-Alkyl, Alkenyl-(O-Alkylen)$_n$-O-Alkenyl, Alkyl-(C=O)-(O-Alkylen)$_n$-O-(C=O)-Alkyl, Alkenyl-(C=O)-(O-Alkylen)$_n$-O-(C=O)-Alkenyl, Alkyl-Aromat-(O-Alkylen)$_n$-O-(C=O)-Aromat-Alkyl, wobei n wie vorstehend definiert ist, vorzugsweise ist n größer gleich 2, bevorzugt ist n = 5 bis 50, insbesondere n = 5 bis 25, wobei jedes Alkylen jeweils unabhängig 2 bis 6 C-Atome umfasst und Alkyl und/oder Alkenyl jeweils unabhängig 1 bis 24 C-Atome umfassen, insbesondere 1 bis 20 C-Atome.

Bevorzugt sind die terminalen Gruppen der Polyalkylenoxid-Gruppen aufweisenden Verbindung ausgewählt aus Hydroxy-Gruppen, Alkyl-Gruppen, Alkoxy-Gruppen, Alkylen-Gruppen, Alkylenoxid-Gruppen, Carbonsäureester-Gruppen, insbesondere olefinische Carbonsäureester-Gruppen, aromatischen-Gruppen und/oder Gruppen enthaltend cyclische-Ether. Eine bevorzugte Verbindung umfasst Polyalkylenoxide von Rapsölamid, besonders bevorzugt ist PEG-4-Rapsölamid.

Nach einer weiteren bevorzugten Ausführungsform kann eine wässrige, alkalische Elektrolytzusammensetzung verzweigte Polyalkylenoxid-Gruppen aufweisende Verbindungen aufweisen, die umfassen Ether von Kohlenhydraten, insbesondere Ether von Furanosen oder Pyranosen, die optional Carbonsäureester von Fettsäure aufweisen. Besonders bevorzugt sind Polyalkylenoxid-Gruppen enthaltende Verbindungen von Sorbitan-Fettsäureester, wie Polyoxyethylen(20)sorbitanmonooleat (Tween 80).

Gleichfalls geeignet können eine oder mehrere der folgenden Polysorbate in der Elektrolytzusammensetzung eingesetzt werden: Polysorbat 20 (Polyoxyethylen-(20)-sorbitanmonolaurat) (E 432), Polysorbat 21 (Polyoxyethylen-(4)-sorbitanmonolaurat), Polysorbat 40 (Polyoxyethylen-(20)-sorbitanmonopalmitat) (E 434), Polysorbat 60 (Polyoxyethylen-(20)-sorbitanmonostearat) (E 435), Polysorbat 61 (Polyoxyethylen-(4)-sorbitanmonostearat), Polysorbat 65 (Polyoxyethylen-(20)-sorbitantristearat) (E 436), Polysorbat 80 (Polyoxyethylen-(20)-sorbitanmonooleat) (E 433), Polysorbat 81 (Polyoxyethylen-(5)-sorbitanmonooleat), Polysorbat 85 (Polyoxyethylen-(20)-sorbitantrioleat), Polysorbat 120 (Polyoxyethylen-(20)-sorbitanmonoisostearat).

Eine besonders bevorzugte Verbindung ist ausgewählt aus 4-(1,1,3,3-Tetramethyl-butyl)phenyl-polyethylen glycolen, bevorzugt 4-(1,1,3,3-Tetramethylbutyl)phenyl-polyethylene glycol, *t*-Octylphenoxypolyethoxyethanol, Polyethylene glycol *tert*-octylphenyl ether, mit n gleich 5 bis 100, bevorzugt mit n = 9 bis 10 (Triton X-100) oder n = 7 bis 8 (Triton X-114).

Ebenso Gegenstand der Erfindung ist eine Elektrolytzusammensetzung umfassend 2,0 bis 99,0 Gew.-% Wasser und 0,0001 bis 15 Gew.-% Polyalkylenoxid-Gruppen aufweisende Verbindungen oder Gemische dieser, insbesondere 0,01 bis 10 Gew.-%, bevorzugt 0,01 bis 5 Gew.-%, besonders bevorzugt 0,05 bis 2 Gew.-% und einen Gehalt von 0,001 bis 40 Gew.-% Alkalihydroxid, insbesondere 10 bis 40 Gew.-%, in Bezug auf die Gesamtzusammensetzung von 100 Gew.-%. Optional kann die Elektrolytzusammensetzung Alkalisilikat enthalten, wobei der Gehalt vorzugsweise unter 4 Mol/Liter Alkalisilikat, bevorzugt von 0,001 bis 3,5 Mol/Liter Alkalisilikat beträgt, insbesondere in der Gesamtzusammensetzung von 100 Gew.-%.

Bevorzugt umfasst die Elektrolytzusammensetzung mindestens ein Alkalihydroxid ausgewählt aus NaOH und KOH und optional weitere alkalische lösliche Salze, wie beispielsweise Erdalkalihydroxide, basische Metalloxide oder organische Basen. Bevorzugt umfasst die Elektrolytzusammensetzung ein Alkalihydroxid ausgewählt aus Kaliumhydroxid (KOH) und Natriumhydroxid (NaOH). Zweckmäßig können alternative alkalische Salze, wie Carbonate oder Metalloxide in der Elektrolytzusammensetzung eingesetzt werden.

Zur Herstellung der wässrigen Elektrolytzusammensetzung wird vorzugsweise destilliertes Wasser eingesetzt.

Nach einer besonders bevorzugten Ausführungsform ist die Elektrolytzusammensetzung eine wässrige, alkalische Zusammensetzung umfassend Alkalihydroxid, insbesondere Kaliumhydroxid, und mindestens eine lineare oder verzweigte Polyalkylenoxid-Gruppen aufweisende Verbindung mit mindestens drei Alkylenoxid-Gruppen in der Verbindung oder Gemische von mindestens zwei dieser Verbindungen. Dabei ist es bevorzugt, wenn der Gehalt des Alkalihydroxids von 0,001 bis 6 Mol/Liter, vorzugsweise von 1 bis 5,5 Mol/Liter in der wässrigen, alkalischen Elektrolytzusammensetzung beträgt.

Der Gehalt an Polyalkylenoxid-Gruppen aufweisenden Verbindung kann von der gewählten Elektrodenoberfläche sowie weiteren Verfahrensbedingungen wie Temperatur, Durchflussmenge in der Zelle, Porengröße der Elektrodenoberfläche etc. abhängen. Daher kann der Gehalt an Polyalkylenoxid-Gruppen aufweisende Verbindung von 0,000001 bis 50.000 ppm-Gew., insbesondere von 0,01 bis 20.000 ppm-Gew., bevorzugt von 0,01 ppm-Gew. bis 10.000 ppm-Gew., in der Elektrolytzusammensetzung, insbesondere mit einer Gesamtzusammensetzung von 100 Gew.-% betragen. Bevorzugt ist der Gehalt an Polyalkylenoxid-Gruppen aufweisende Verbindung in der Elektrolytzusammensetzung von 100 ppm-Gew. bis 8000 ppm-Gew., besonders bevorzugt sind 200 ppm.-Gew. bis 6000 ppm-Gew., vorzugsweise 400 ppm-Gew. bis 4000 ppm-Gew.

Gleichfalls Gegenstand der Erfindung ist eine chemische Primärzelle aufweisend eine Anode, eine Kathode, einen Elektrolyten sowie mindestens einen Separator, wobei der Separator die Kathode und die Anode voneinander separiert, und die Kathode umfasst als Material Mangandioxid und optional Kohlenstoff enthaltenden Leitfähigkeitsvermittler, wobei die Anode als Anodenmaterial Silizium umfasst, und wobei das Silizium in Form von Silizium-Partikeln vorliegt. Die Silizium-Primärpartikel weisen vorzugsweise eine Partikelgröße zwischen 1 nm bis 30 000 nm auf. Nach einer Alternative sind die Silizium-partikel kristallin, insbesondere sind die Siliziumpartikel polykristallin. Nach einer weiteren Alternative sind die Siliziumpartikel im Wesentlichen röntgenamorph. Ferner können Gemische von Siliziumpartikeln umfassend amorphe und kristalline Siliziumpartikel als Anodenmaterial eingesetzt werden.

Somit ist Gegenstand der Erfindung eine Vorrichtung umfassend mindestens eine elektrochemische Primärzelle aufweisend einen Hohlraum mit mindestens einer Öffnung, insbesondere einem Hohlraum mit Seitenwänden mit mindestens einer Öffnung, besonders bevorzugt ist der Hohlraum eine Durchflusszelle, eine Anode, eine Kathode sowie mindestens einen Separator und optional enthaltend eine erfindungsgemäße Elektrolytlösung, wobei der mindestens eine Separator die Kathode und die Anode voneinander separiert. Bevorzugt weist die Anode einen Separator und die Kathode einen Separator auf. Eine Primärzelle kann als Separator ein Polymervlies mit ca. 50 Mikrometer Dicke aufweisen.

Nach einer bevorzugten Ausführungsform kann die Primärzelle mit einem hermetisch abgeschlossenen Gehäuse vorliegen, wobei i) das Material der Kathode der Primärzelle Mangandioxid und optional einen Kohlenstoff enthaltenden Leitfähigkeitsvermittler aufweist. Als ein hermetisch abgeschlossenes Gehäuse der Primärzelle wird in der Regel ein Gehäuse verstanden, dass aus einem gegenüber alkalischen Elektrolyten inertem Material hergestellt ist und hermetisch, insbesondere fluiddicht (gas- und flüssigkeitsdicht) abgeschlossen ist. Als Material für das Gehäuse, die Leitungen oder das Reservoir oder auch für den Separator kommen beispielsweise Polyetheretherketone, Polyaryletherketone, Polyphenylensulfid (PPS), Polyoxymethylen-Copolymere (POM-C), Polyamid, Cycloolefine oder andere High-performance Kunststoffe oder auch metallische Legierungen in Frage. Die Komponenten des hermetisch abgeschlossenen Gehäuses können mittels Laser verschweißt oder mittels Plasmaverfahren verschweißt sein. Dieses hermetisch abgeschlossene Gehäuse der Primärzelle ist nicht das Gehäuse das den Hohlraum bilden kann.

Die Kathode kann als Kohlenstoffnetzelektrode und mit $MnO_2$ geträgert ausgeführt sein.

Der Separator kann mit einer Shut-down-Funktion ausgelegt sein, um einen Zutritt des Elektrolyten bei unerwünschten Verfahrensbedingungen von der Anode und/oder der Kathode zu unterbinden. Gleichfalls kann die Primärzelle eine Berstplatte aufweisen, um bei unerwünschtem Druckanstieg eine Explosion der Primärzelle zu vermeiden und den gezielten Austritt der Komponenten aus der Primärzelle bei Druckanstieg zu steuern.

Nach einer zweiten Alternative kann die Primärzelle als die Kathode ii) eine Luftkathode aufweisen. Das Material der Kathode in dieser Primärzelle umfasst vorzugsweise Mangandioxid und/oder Schwefel und optional einen Kohlenstoff enthaltenden Leitfähigkeitsvermittler, insbesondere weist die Luftkathode eine für Kohlendioxid-undurchlässige Membran auf, die vorzugsweise in der Primärzelle so angeordnet ist, dass sie den Zutritt von Kohlendioxid aus der Umgebungsluft an die Kathode verhindert.

Des Weiteren kann ein wirtschaftlich sinnvolles Kathodenmaterial ausgewählt sein aus einer physikalischen Mischung von Mangandioxid ($MnO_2$) und einem Leitfähigkeitsvermittler. Der optionale Gehalt des Leitfähigkeitsvermittlers in den Elektroden der Primärzelle kann in der Kathode und in der Anode unterschiedlich hoch sein. Für Mangandioxid ist ein Gehalt an Leitfähigkeitsvermittler im Material der Kathode von circa 5 bis 65 Gew.-%, bevorzugt 5 bis 15 Gew.-% üblich. Generell kann der Gehalt des Leitfähigkeitsvermittlers von 5 bis 70 Gew.-% im Material der Kathode betragen. Alternativ bevorzugt können Gehalte im Bereich von 15 bis 20 Gew.-% für einen geringeren Widerstand oder auch als Obergrenze 30 bis 60 Gew.-% sein. Dabei beträgt das Material der Kathode in Summe immer 100 Gew.-%.

Gegenstand der Erfindung ist somit mindestens eine elektrochemische Primärzelle, welche eine Anode, eine Kathode, einen Elektrolyten sowie mindestens einen Separator aufweist, wobei der mindestens eine Separator die Kathode und die Anode voneinander separiert, und die Kathode umfasst als Material Mangandioxid und optional einen Kohlenstoff enthaltenden Leitfähigkeitsvermittler, wobei die Anode als Anodenmaterial Silizium enthält. Nach einer bevorzugten Alternative weist sowohl jede Anode als auch jede Kathode einen Separator auf. So kann beispielsweise der Separator als Hohlkörper oder als flache Membran ausgebildet sein. Als dreidimensionaler Hohlkörper kann beispielsweise ein Separator das Anodenmaterial oder das Kathodenmaterial aufnehmen.

Vorzugsweise liegen die Silizium-Partikel in der Anode als Aggregate vor. Besonders bevorzugt ist der Gehalt an Lithium in den Silizium-Partikeln kleiner gleich 1 Gew.-% in Bezug auf den Siliziumgehalt der Anode von 100 Gew.-% der Primärzelle, wobei der Gehalt an Lithium bevorzugt im geladenen Zustand der Primärzelle kleiner gleich 0.1 Gew.-% beträgt. Nach einer bevorzugten Alternative weist die Anode ein Granulat von Silizium-Partikeln auf, wobei die Silizium-Partikel des Granulates vorzugsweise in mindestens einer Dimension eine Kantenlänge von 3,5 nm oder einen Durchmesser von 3,5 nm aufweisen und vorzugsweise mindestens zwei der drei Durchmesser, deren Mittelpunkt im Kartesischen Koordinatensystem im Schnittpunkt der x,y und z-Achsen liegt, eine Länge von größer gleich 3,5 nm aufweisen. In einem solchen Koordinatensystem beträgt die Dritte Dimension vorzugsweise größer gleich 1 nm (Dicke des Silizium-Partikels). Besonders bevorzugt weisen die Partikel Kantenlängen von größer gleich 3,5 nm oder Durchmesser von größer gleich 3,5 nm und eine Dicke von 1 nm auf.

Bevorzugt umfasst die Anode ein Granulat von Silizium-Partikeln mit einer mindestens bimodalen, vorzugsweise mit einer mindestens trimodalen Verteilung an Fraktionen von Silizium-Partikeln, wobei eine Fraktion ausgewählt ist aus Silizium-Partikeln mit einem Durchmesser größer als 10 nm und kleiner gleich 3 mm, bevorzugt sind Granulate, die in mindestens einer Dimension eine Kantenlänge von 1 mm aufweisen. Bevorzugt umfasst die Anode kristalline Silizium-Partikel umfassend 111-Ebenen. Vorteil grober Silizium-Partikel (in mindestens einer Dimension eine Kantenlänge von mindestens 10 Mikrometer) ist eine optimale Abstimmung von aktiver Oberfläche und Porosität, die ein Eindringen des wässrigen, alkalischen Elektrolyten ermöglicht.

Besonders bevorzugt kann die Anode als Anodenmaterial Silizium umfassen, das in Granulat-Form von Silizium-Partikeln ausgewählt aus amorphen, kristallinen oder polykristallinen Partikeln vorliegt. Besonders Bi- oder multimodale Mischungen umfassen vorzugsweise zudem Silizium-Partikel als Agglomerate von Silizium-Primärpartikeln mit einer Partikelgröße zwischen 1 nm bis 300 000 nm.

Grundsätzlich kann das Anodenmaterial Silizium als Granulat in Form von Silizium-Partikeln umfassen, wobei die Partikelgrößen im Bereich von 10 nm bis 4 mm vorliegen können. Bspw. als Partikel in einem Granulat mit bi- oder trimodaler Verteilung der Partikelgrößen. Die Bereiche der Partikelgrößen können von 0,1 bis 300 Mikrometer oder von 0,1 bis 30 Mikrometer oder von 10 nm bis 1000 nm, vorzugsweise von 19 nm bis 300 nm betragen. Bevorzugt liegen diese Silizium-Partikel als amorphe und/oder polykristalline Partikel vor. Dabei kann es besonders bevorzugt sein, wenn das Anodenmaterial ein bi- bis multimodales Granulat von Silizium-Partikeln oder in Form einer gepressten oder gesinterten Tablette vorliegt.

Nach einer weiteren bevorzugten Ausführungsform umfasst eine Anode, insbesondere jede Anode jeweils unabhängig von anderen Anoden in Primärzellen, dem Verfahren oder in dem System umfassend Primärzellen, als Anodenmaterial Silizium mit einem Gehalt an Bor von 10 Gew.-ppm bis 1,8 Gew.-% in Bezug auf die Gesamtzusammensetzung des Siliziums von 100 Gew.-% aufweist, insbesondere weist das Anodenmaterial Silizium-Partikel mit einem Gehalt an Bor von 10 Gew.-ppm bis 1,8 Gew.-% in Bezug auf die Gesamtzusammensetzung der Silizium-Partikel von 100 Gew.-%, besonders bevorzugt ist Anodenmaterial in Form von aneinander gesinterten Silizium-Partikeln.

Separatoren, wie Batterieseparatoren in einer Alkali-Batteriezelle werden zum Trennen einer negativen Elektrode von einer positiven Elektrode verwendet, wenn sie in einem geeigneten Elektrolyten angeordnet sind. Neben der Trennung der Elektroden weist der Separator während des Betriebs der Zelle, wenn die normalen chemischen Reaktionen ablaufen, einen verhältnismäßig niedrigen Widerstand gegenüber der Elektrolytionenübertragung, jedoch einen beträchtlich hohen Widerstand gegenüber der Elektrodenionenübertragung auf.

Der Separator wird beispielsweise gebildet durch Aufbringen eines verbesserten Coatings. Bei dem Separator handelt es sich in der Regel um ein flexibles, faseriges und poröses Substrat, das gegen starkes Alkali und gegen Oxidation beständig ist. Der Separator kann ein Composite sein und kann vorzugsweise auf mindestens einem Polymer, wie Polyethylen, Polypropylen, Polyacrylat, PEEK, PEAK, Lingnocellulose, Cellulose und/oder Mikrozellulose basieren.

Ferner ist es bevorzugt, dass das Anodenmaterial Silizium-Partikel sowie Leitfähigkeits-vermittler umfasst, insbesondere umfasst der Leitfähigkeitsvermittler Kohlenstoff enthaltende Partikel oder eine Kohlenstoff enthaltende Paste, wie elektrisch leitfähige organische Polymere. Ein besonders bevorzugtes Anodenmaterial der Anode umfasst zu 10 bis 100,00 Gew.-%, insbesondere von 5 bis 90 Gew.-%, bevorzugt von 10 bis 95 Gew.-% Silizium-Partikel und einen Kohlenstoff enthaltenden Leitfähigkeitsvermittler, insbesondere von 5 bis 90 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm.

Bevorzugt ist ebenfalls ein Anodenmaterial der Anode umfassend zu 20 bis 75 Gew.-%, vorzugsweise von 20 bis 60 Gew.-%, Silizium-Partikel und einen Kohlenstoff enthaltenden Leitfähigkeitsvermittler, insbesondere von 25 bis 80 Gew.-%, bevorzugt von 40 bis 80 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm. Ein besonders bevorzugtes Anodenmaterial der Anode umfasst zu 45 bis 55 Gew.-% Silizium-Partikel und zu 55 bis 45 Gew.-% einen Kohlenstoff enthaltenden Leitfähigkeitsvermittler, wobei die Gesamtzusammensetzung des Anodenmaterials 100 Gew.-%, d.h. ohne Elektrolyt und/oder getrocknet, beträgt.

Entsprechend einer bevorzugten Ausführungsvariante umfasst das Silizium, insbesondere die Silizium-Partikel, bevorzugt die amorphen Silizium-Partikel, des Anodenmaterials Dotierstoffe, wobei die Dotierstoffe ausgewählt sind aus Elementen der 13. Hauptgruppe, insbesondere umfassend Bor, Indium, Aluminium und/oder Gallium, und aus Elementen der 15. Hauptgruppe, insbesondere umfassend Phosphor, Arsen und/oder Antimon sowie Elemente der Eisengruppe, besonders bevorzugt sind Bor, Aluminium, Phosphor und/oder Eisen. Die Elemente der 13. Hauptgruppe (neue Nomenklatur: Gruppe 13 des Periodensystems) sind Elektronen-Akzeptoren neuer Nomenklatur. Als Elektronen-Donatoren werden Elemente der 15. Hauptgruppe (neue Nomenklatur: Gruppe 15 des Periodensystems) eingesetzt.

Nach einer Ausführungsform umfasst das Silizium, insbesondere die Silizium-Partikel des Anodenmaterials, Dotierstoffe, wobei die Dotierstoffe zu größer gleich 1 Element der 15. Hauptgruppe auf $10^6$ Silizium-Atome und/oder größer gleich 1 Element der 13. Hauptgruppe auf $10^6$ Silizium-Atome vorliegen, insbesondere größer gleich 1 Element der 15. Hauptgruppe auf $10^4$ Silizium-Atome und/oder größer gleich 1 Element der 13. Hauptgruppe auf $10^4$ Silizium-Atome, bestimmt mittels dem Fachmann bekannter ICP-MS Analyse (Inductive Plasma Discharge-Massenspektroskopie, welche unter Wikipedia ausführlich beschrieben ist: https://de.wikipedia.org/wiki/Massenspektrometrie_mit_induktiv_gekoppeltem_Plasma). Alternativ kann die Analyse auch durch GD-MS erfolgen (GDMS/GD-MS-Glimmentladungs-Massenspektroskopie mit Secondary Electron Multiplier- (SEM) und/oder Faraday-Detector gemäß Quelle:https://assets.thermofisher.com/TFS-Assets/CMD/brochures/BR-30066-GD-MS-ELEMENT-GD-PLUS-BR30066-EN.pdf). Den Farady-Detektor vorzugsweise für die Messungen von Spuren-Konzentrationen im %-Bereich.

Nach einer alternativen, bevorzugten Ausführungsform umfasst das Silizium, insbesondere die amorphen Silizium-Partikel, des Anodenmaterials Dotierstoffe, wobei die Dotierstoffe größer gleich $10^2$ Atome (ca. 100 Gew.-ppm, abhängig vom Atomgewicht des Dotierstoffes) der 15. Hauptgruppe auf $10^6$ Silizium-Atome und/oder größer gleich $10^2$ Atome der 13. Hauptgruppe auf $10^6$ Silizium-Atome vorliegen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich $2 \cdot 10^3$ Atome der 15. Hauptgruppe auf $10^6$ Silizium-Atome größer gleich $2 \cdot 10^4$ Atome der 13. Hauptgruppe auf $10^6$ Silizium-Atome vorliegen. Die vorstehenden Gehalte an Dotierstoffen im Silizium des Anodenmaterials können inhomogen im Silizium verteilt sein, sowie die Gehalte integral über die Gesamtmenge des Siliziums im Anodenmaterial im Mittel vorliegen. Zur Bestimmung obiger Gehalte wird eine Prüfmenge von 1 g Prüfmenge mittels GD-MS oder ICPMS vermessen, wobei zwischen beiden Methoden gewisse Abweichungen bestimmt werden können, vorzugsweise wird ein Mittelwert bestimmt. Entsprechend weiteren bevorzugten, alternativen Ausführungsformen umfasst das Silizium, insbesondere die amorphen Silizium-Partikel, des Anodenmaterials Dotierstoffe, wobei die Dotierstoffe größer gleich $10^2$ Atome der 15. Hauptgruppe auf $10^6$ Silizium-Atome und/oder größer gleich $10^2$ Atome der 13. Hauptgruppe auf $10^6$ Silizium-Atome betragen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich $10^3$ Atome der 15. Hauptgruppe auf $10^6$ Silizium-Atome und/oder größer gleich $10^3$ Atome der 13. Hauptgruppe auf $10^6$ Silizium-Atome umfassen.

Die Silizium-Partikel können auf atomarer Ebene eine Legierung von Silizium mit mindestens einem Element der 13. oder 15 Hauptgruppe aufweisen, wobei das mindestens eine Element der 13. oder 15. Hauptgruppe mit größer gleich $10^{21}$ Atomen/cm$^3$ ausgewählt aus mindestens einem Elektronendonator und Elektronenakzeptor vorliegt. Dabei liegt die Legierung von Silizium auf atomarer Ebene mit mindestens einem Element der 13. oder 15. Hauptgruppe als eine amorphe oder kristalline Phase vor. Besonders bevorzugt weisen die Siliziumpartikel einen Gehalt an Bor von 10 ppm-Gew bis 2,5 Gew.-% in Bezug auf den Gesamtgehalt von 100 Gew.-% des Siliziumpartikels auf, bevorzugt ist ein Gehalt von 10 ppm-Gew bis 1,8, besonders bevorzugt von 1,8 Gew.-% plus/minus 0,2 Gew.-%. Analog kann das Silizium einen Gehalt an Bor von 10 ppm-Gew bis 1,8 Gew.-% in Bezug auf den Gesamtgehalt von 100 Gew.-% des Siliziums aufweisen.

Gegenstand der Erfindung ist eine Primärzelle umfassend Silizium-Partikel, die einen Gehalt an Bor von 10 Gew.-ppm bis 1,8 Gew.-% aufweisen.

Entsprechend zwei alternativen besonders bevorzugten Ausführungsformen umfasst die Kathode der Primärzelle a) als Material Mangandioxid als Kathodenmaterial, oder b) die Kathode der Primärzelle ist eine Luftkathode und die Kathode umfasst Manganoxid, insbesondere Manganoxid und Mangandioxid, Platin, Platin-Basis, Nickel-Kobalt-Cyanide, oder Silber als Katalysator im Kathodenmaterial. Dabei ist die Luftkathode besonders bevorzugt.

Nickel-Kobalt-Cyanide stehen beispielhaft für die Klasse von Nichtedelmetallkatalysatoren mit hervorragender Elektroaktivität für die Sauerstoffreduktionsreaktion im neutralen Elektrolyten. Die Zubereitung der Ni/Co-dotierten C-N-Hohl-Nanoröhren-Verbundkatalysatoren (C-N, Co/C-N, Ni/C-N und Ni-Co/C-N) erfolgt durch eine einfache Pyrolyse des Ni/Co-Salz~Dicyandiamid~Glucose~Gemenges. Eine entsprechende Silizium-Luft-Batterie wurde in einem neutralen Medium unter Verwendung der vorbereiteten Probe als Katalysator für die Luftelektrode montiert und zeigte eine hervorragende Entladungsleistung und Stabilität.

Die Kathode umfasst vorzugsweise als Material, d.h. als Kathodenmaterial oder als Katalysator im Kathodenmaterial zur Beschleunigung der Löslichkeit von Sauerstoff, Mangandioxid. Ein bevorzugtes Kathodenmaterial für eine Kathode in einer Primärzelle mit Luftkathode umfasst vorzugsweise Manganoxid, insbesondere Manganoxid und/oder Mangandioxid, und Silber als Katalysator. Ein besonders bevorzugtes Kathodenmaterial, insbesondere für eine Primärzelle mit Luftkathode, weist eine hydrophobe Kathode auf, deren Kathodenmaterial eine Mischung aus Mangan(di)oxid, vorzugsweise einer durchschnittlichen Partikelgröße von kleiner gleich 10 $\mu$m (Mikrometer), insbesondere elektrolytisches Gamma-Mangandioxid, einen Leitfähigkeitsvermittler und einen polymeren halogenierten Kohlenwasserstoff, insbesondere einen polymeren fluorierten Kohlenwasserstoff, umfasst, insbesondere einen Polytetrafluorethylen. Die Mischung kann in Platten gepresst, getrocknet werden. Dabei wird vorzugsweise in der Primärzelle auf die der Luft ausgesetzten Kathodenseite ein mikroporöser, hydrophober Film, beispielsweise aus einem polymeren fluorierten Kohlenwasserstoff, aufgebracht.

Ein besonders bevorzugtes Kathodenmaterial der Kathode in einer hermetisch geschlossenen Primärzelle umfasst zu 75 bis 85 Gew.-% Mangandioxid und zu 15 bis 25 Gew.-% einen Kohlenstoff enthaltenden Leitfähigkeitsvermittler, wobei die Gesamtzusammensetzung des Kathodenmaterials 100 Gew.-% (Kathodenmaterial ohne Elektrolyt und/oder getrocknet) beträgt.

Der Kohlenstoff enthaltende Leitfähigkeitsvermittler umfasst vorzugsweise Kohlenstoff enthaltende Partikel, besonders bevorzugt Graphen enthaltende Partikel. Die Kohlenstoffpartikel weisen vorzugsweise eine Partikelgrößenverteilung im Bereich von 0,1 nm bis 5 Mikrometer, bevorzugt von 5 nm bis 5 Mikrometer auf. Dabei ist es weiter bevorzugt, wenn die Kohlenstoffpartikel eine Partikelgröße im Bereich von 5 nm bis 300 nm, insbesondere von 10 nm bis 150 nm, besonders bevorzugt von 20 bis 100 nm aufweisen und optional als Agglomerate einer Größe von 100 nm bis 3 Mikrometer, vorzugsweise einer Größe von 300 nm bis 2 Mikrometer vorliegen.

Die Kathode und/oder die Anode weisen vorzugsweise eine Porosität auf, die bestimmt wird über Dichtemessung. Vorzugsweise beträgt die Porosität der Kathode und/oder der Anode von 18 bis 43 Vol.-% in Bezug auf das Gesamtvolumen der Kathode von 100 Vol.-%, bevorzugt von 24 bis 28 Vol.-%, besonders bevorzugt von 25 Vol.-% bis 27 Vol.-%. Die Porosität ist der Zwischenraum in der Anode und/oder der Kathode, der für den fluiden Elektrolyten verfügbar ist. Die Porosität wird ausgedrückt als prozentuales Volumen des geometrischen Gesamtvolumens der Kathode oder der Anode. Somit können die über die Porosität gebildeten Zwischenräume teilweise oder vollständig mit Elektrolyten gefüllt sein.

Die Porosität der Anode (Volumendichte Anodenmaterial) berechnet sich aus der Dichte der Silizium-Anode dividiert durch die Feststoffdichte von Rein-Silizium von 2,3 g/cm$^3$.

$$\text{Porosität POS} = 1 - (\text{Dichte Silizium-Anode in g/cm}^3 \,/\, \text{Festkörperdichte Silizium mit 2,3 g/cm}^3)$$

Bevorzugt ist eine Dichte der Siliziumanode von ~ 1,5 in g/cm$^3$ woraus sich eine Porosität POS von 1- (1,5 g/cm$^3$ / 2,3 g/cm$^3$) = 1-0,65 = 0,35 bzw. von 35% errechnet. Bevorzugte Porositäten liegen zwischen 0,01 und 0,5 bzw. zwischen 1% und 50%.

Nach gleichfalls bevorzugten Alternativen kann das Gewichtsverhältnis von Mangandioxid im Kathodenmaterial zum Elektrolyten von 2,2 bis 2,9 betragen. Alternativ oder gleichzeitig kann das Gewichtsverhältnis der Silizium-Partikel im Anodenmaterial zum Elektrolyt von 0,6 bis 1,7 betragen.

Ein besonders bevorzugtes Kathodenmaterial der Kathode umfasst zu 70 bis 95 Gew.-% als Kathodenmaterial Mangandioxid, insbesondere Battery Grade und bevorzugt einer Partikel-größe von kleiner gleich 10 Mikrometer, und einen Kohlenstoff enthaltenden Leitfähigkeits-vermittler, insbesondere von 5 bis 30 Gew.-% Leitfähigkeitsvermittler, und optional weitere Additive auf 100 Gew.-% des Kathodenmaterials. Der Leitfähigkeitsvermittler ist vorzugsweise ein Kohlenstoff enthaltender Partikel, Mischung dieser oder eine Kohlenstoff enthaltende Paste.

Der Kohlenstoff enthaltende Leitfähigkeitsvermittler umfasst besonders bevorzugt

i) Kohlenstoff enthaltende Partikel, die umfassen Ruß, Leit-Ruß, elektrochemisch hergestellten Ruß, Elektroruß, Aktivkohle, Graphit, Graphen und/oder eine Mischung davon, und/oder
ii) eine Kohlenstoff enthaltende Paste, die elektrisch leitfähige Polymere, die Heteroatome N, O und/oder S umfassen können, wie Polyanilin oder Graphen.

Es wurde gefunden, dass Elektroruß als Leitfähigkeitsvermittler wirksamer ist als Graphitpulver. Der hinreichende Anteil von Elektroruß im Anodenmaterial liegt vorzugsweise im Bereich von 50 bis 90 Gew.-% in Bezug auf die Gesamtzusammensetzung. Mit einer zwei Zellen umfassenden Batterie mit 16 cm$^2$ aktiver Elektrodenfläche könnte bereits eine Leistung ausreichend für den Betrieb eines kleinen Lüfters bereitgestellt werden.

In einer besonderen Variante der elektrochemischen Primärzelle liegt an der Kathode und/oder Anode vorzugsweise ein Druck von 0,01 bis 10 MPa an, bevorzugt von 0,5 bis 5,0 MPa, um das Pulvermaterial zu verdichten und den Innenwiderstand der Elektroden auf weniger 10 Ohm/cm zu reduzieren.

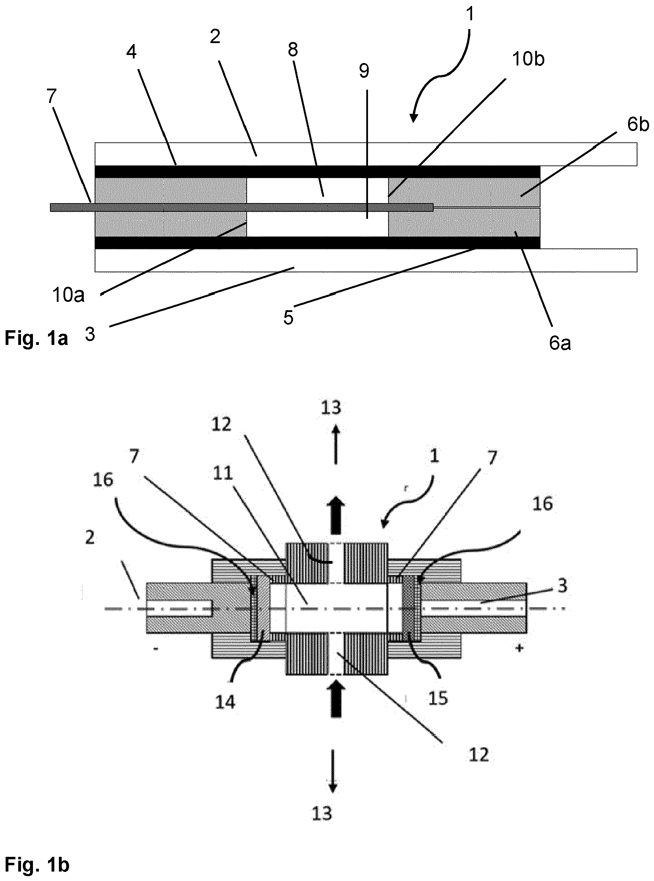

**Ausführungsbeispiele:** Eine Zelle einer Silizium-Primärbatterie wird anhand Fig. 1a näher erläutert: Auf eine isolierende Trägerplatte **3** (quadratische Polymerplatte 4 cm auf 4 cm) wird eine Komposit-Elektrode **5** bestehend aus einem passenden Kontaktblech aus Kupfer oder Edelstahl als Ableitelektrode, einem 4 cm mal 4 cm Nickelnetz, vorzugsweise vergoldet, als Kontaktvermittler zwischen Ableitelektrode und chemisch-inerten Elektrodenträger sowie ein chemisch-inerter Elektrodenträger (vorzugsweise ein Graphit-Polymer-Compound) aufgebracht. Darauf liegt eine 4 cm mal 4 cm Silikonplatte **6a** mit ca. 1 mm Höhe die mit einer zentrischen Aussparung **10a** (Loch) mit ca. 2,5 cm Durchmesser versehen ist. In diese Aussparung wird vorzugsweise Anodenmaterial **9** (Siliziumgranulat oder Pasten-Gemisch aus Siliziumpulver, Leitruß, Wasser, Benetzungsmittel und Elektrolyt) einfügt oder -gestrichen. Hierauf wird ein Separator **7** (z.B. Fließpapier) gelegt, der mit einer Fahne über die 4 cm mal 4 cm große Fläche hinausragt. Auf diesem liegt eine weitere 4 cm mal 4 cm Silikonplatte **6b** mit ca. 1 mm Höhe die mit einer zentrischen Aussparung **10b** (Loch) mit ca. 2,5 cm Durchmesser versehen ist. Darin wird nun das Kathodenmaterial **8** eingestrichen (Pasten-Gemisch aus Mangandioxidpulver, Leitruß, Wasser, Katalysator, Benetzungsmittel und Elektrolyt). Darauf liegt nun die eine weitere Komposit-Elektrode **4** bestehend aus chemisch-inertem Elektrodenträger (vorzugsweise ein Grafit-Polymer-Compound), 4 cm mal 4 cm Nickelnetz, vorzugsweise vergoldet, als Kontaktvermittler zwischen Ableitelektrode und chemisch-inertem Elektrodenträger und ein passendes Kontaktblech aus Kupfer oder Edelstahl als Ableitelektrode oben aufliegend. Darauf liegt eine weiter isolierende Trägerplatte **2** (quadratische Polymerplatte 4 cm auf 4 cm). Dieser sogenannte Sandwichaufbau einer Silizium-Primärzelle **1** kann in einer Schraubstock-Anordnung miteinander verspannt werden.

Der prinzipielle Aufbau einer bevorzugten Variante der Primärzelle ist in **Figur 1b** dargestellt. Die Primärzelle weist eine Anode **14** aus Silizium und eine Luftkathode **15** auf. Die Anoden können gebildet sein aus Silizium-Wafer-Plättchen, Silizium-Granulat-Tablette, verdichteter Pulver-Granulat-Tablette etc. Zwischen Anode **14** und Kathode **15** ist ein Hohlraum **11** zur Aufnahme eines Elektrolyten von ca. 0,6 ml. Die effektive Elektrodenfläche für eine nicht poröse Anodenfläche beträgt ca. 0,44 cm$^2$ (Kreis mit Radius 0,375 cm).

**Figur 1b** stellt eine Zellanordnung einer Primärzelle dar. Jeweils über eine Leitung **12** ist die Zuführung als auch die Abführung des Elektrolyten mit einem Reservoir **13** vorgesehen. **2** und **3** stellen Kontaktelektroden dar. Zwischen Kontaktelektrode **2** und Anode **14** ist ein Ableit-Kontakt-Stütz-Feder-Netz **16** das für einen stabilen, flächigen elektrischen Kontakt zwischen Kontaktelektrode **2** und Anode **14** bzw. zwischen Kontaktelektrode 3 und Kathode **15** sorgt. Bei Verwendung einer Luftkathode **15** ist die zugehörige Kontaktelektrode **3** als Hohlelektrode ausgeführt, damit Luft bzw. Sauerstoff an die Luftkathode gelangen kann. An der Kontaktelektrode **2** ist beispielhaft eine Bohrung dargestellt über die ein Kabel zur Stromableitung (Schraube mit Kabelöse) angeschlossen werden kann. Werden Anode und /oder Kathode mit Pasten befeuert, dann trennt die Anode bzw. die Kathode ein Separator. Die Kontaktelektroden **2** und **3** bestehen aus elektrisch leitfähigen Materialen bspw. Graphit-Polymer-Compounds. Diese sind in den Batteriekörper der aus isolierendem und korrosionsfestem Material z.B. PEEK oder Plexiglas besteht eingeschraubt bzw. eingelassen. Die Kontaktelektroden **2** und **3** drücken auf das Ableit-Kontakt-Stütz-Feder-Netz **16**, das wiederum auf die Anode **14** bzw. Kathode **15** drückt, welche wiederum vom Elektrolytkörper **12** mit den Hohlringen **7** einen Gegendruck erfahren. Das Ableit-Kontakt-StützFeder-Netz **16** kompensiert die mechanischen Spannungen, die an der Silizium-Anode bzw. der (Luft-) Kathode auftreten. Das Reservoir **13** ist nicht dargestellt und kann ein zweiter Hohlraum in Form eines Behälters mit oder ohne Pumpe sein.

Für eine Primärzelle (**Fig. 1b**) unter Belastung werden wurde ein Innenwiderstand von 8 KiloOhm [kΩ] gemessen. Dieser Wert konnte unter Verwendung folgender Zustandswerte der Primärzelle durch Berechnung bestätigt werden: (Temp$_2$: 25°C): Uo=1,4Volt, UKL1=1,23Volt, 22 MikroAmpere [mA] Strom; Graphische Bestimmung des Ik (Kurzschlußstroms) über Uo=1,4 Volt und UI=1,2 Volt, mit 22 MikroAmpere ergibt Ik = 175 MikroAmpere und Ri= 8 KiloOhm [kΩ] für eine Elektrodenfläche von 0,44 cm$^2$. (Abkürzung: KI: Klemme). Entsprechend unter Belastung bei höherer Temperatur (Temp$_1$: 60°C): Uo=1,4Volt, UKL1=1,39 Volt, 22 MikroAmpere Strom berechnet sich der Innenwiderstand Ri kleiner 1 KiloOhm [kΩ].

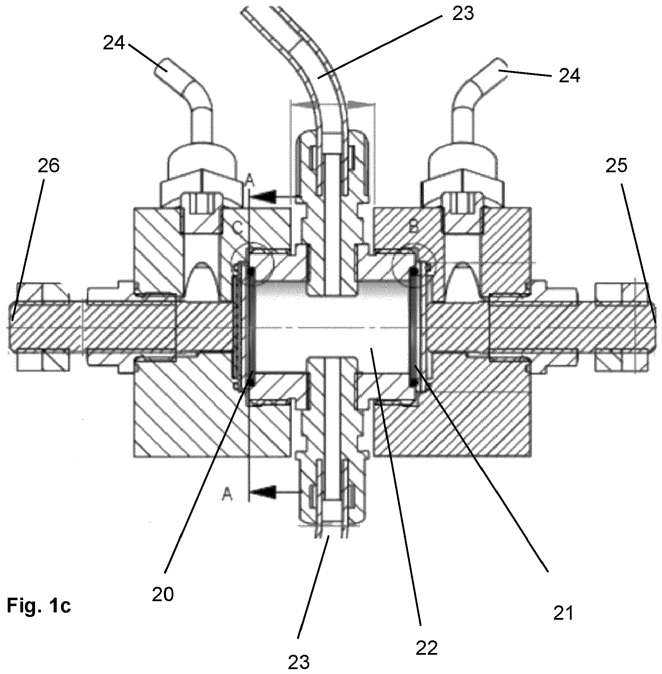

**Figur 1c** zeigt einen realen Aufbau der Versuchszelle: **20**: Anode in Form einer Scheibe umfassend Siliziumpartikel als Pulver in einem Separator bzw. als gesinterte Scheibe aus Siliziumpartikeln. Alternative kann eine Silizium-Kohlenstoffpaste als Anode in Form einer Scheibe eingesetzt werden, **21**: Luftkathode, **22**: Elektrolytreservoir (20 ml, 6 cm$^2$ Anoden- und Kathodenfläche); **23**: Zu-/Ableitung Elektrolytflüssigkeit; **24**: Zu-/Ableitung Inertgas (Argon und/oder N$_2$); **25**: Stromabnehmer Kathode, **26**: Stromabnehmer Anode.

Untersucht wurde das Verhalten der Zellspannung bei einer Änderung der Elektrolyttemperatur.

Batterieversuche **A**: Wässriger alkalischer Elektrolyt, an Silizium-Wafern (p-dotiert) als Silizium Anoden in wässriger 5 molarer KOH (KOH/Wasser (dest.)).

Die **Figuren 2a** und **2b** stellen dar die Zellspannung (V) einer Primärzelle (**Fig. 1b**) mit einem wässrigen Elektrolyten mit 5M KOH in Wasser bei 25 °C und 60 °C als offene Zellspannung (OCV: open circuit V) und als Entladespannung mit 50 μA/cm$^2$ (25 °C, 50% rel. Luftfeuchtigkeit, Spannungsprofile für Zellen unter OCV und Entladung über 24h, Elektrolytstrom kontinuierlich mit Durchflussrate von 4,5 mL/min). Deutlich erkennbar ist, dass eine Temperaturerhöhung von 25°C auf 60°C zu einer erhöhten Zellspannung bei einer Entladung mit 50μA/cm$^2$ führt. Somit belegen die Messungen, dass auch eine Entladung mit erhöhter Stromdichte möglich ist.

**Tabelle 1:** Temperaturwechsel (OVC und Entladung)

| Temperatur | Zelle | Korrosionsmasse / mg | Anoden Massenkonversionseffizienz / % |
|---|---|---|---|
| 25°C | 4h OCV + 20h Entladung | 5.27 | 2.15 |
| | 24h OCV | 4.85 | 0 |
| 60°C | 4h OCV + 20h Entladung | 48.16 | 0.24 |
| | 24h OCV | 49.61 | 0 |

**Fig. 2a**: wässrige 5M KOH mit Elektrolytwechsel über 24 Stunden (davon OCV 4 Stunden, danach 20 Stunden Entladung) bei 25 °C (50% Luftfeuchtigkeit) und einem Elektrolytstrom mit kontinuierlicher Durchflussrate von 4,5 mL/min.

**Fig. 2b:** wässrige 5M KOH mit Elektrolytwechsel über 24 Stunden (davon OCV 4 Stunden, danach 20 Stunden Entladung) bei 60 °C (50% Luftfeuchtigkeit) und einem Elektrolytstrom mit kontinuierlicher Durchflussrate von 4,5 mL/min.

Die Massenkonversionseffizienz gemäß Tabelle 1 können durch Wahl bzw. Verwendung geeigneter Netzmitteln oder Inhibitoren, wie Polyalkylenoxid-Gruppen aufweisende Verbindungen, verbessert werden. Die Massenkonversionseffizienz berechnet sich wie folgt:

$$m_{\mathrm{corr}} = m_{\mathrm{tot}} - m_{\mathrm{dis}} = m_{\mathrm{tot}} - \frac{\text{praktische Entladekapazität}}{\text{theoretische Kapazität}}$$

$m_{\mathrm{corr}}$ : Massenverlust durch Korrosion

$m_{\mathrm{tot}}$: Gesamtmassenverlust durch Korrosion + Entladung

$m_{\mathrm{dis}}$: Massenverlust durch Entladung

$$\text{Anoden Massenkonversionseffizienz} = \frac{m_{\mathrm{dis}}}{m_{\mathrm{dis}} + m_{\mathrm{corr}}} \cdot 100\%$$

Aus den gemessenen Elektrolytströmen der Figuren 2a und 2b wird ersichtlich, dass die Spannung während der Entladung bei erhöhter Temperatur der offenen Zellspannung angeglichen werden kann. Aus anderen Untersuchungen am gleichen System wurde gefunden, dass die Massenkonversionseffizienz durch Zugabe von Inhibitoren wieder deutlich vermindert werden kann.

Der Vorteil des Elektrolytwechsels ist zudem, dass jeweils auch frischer Elektrolyt mit definierter Zusammensetzung in den Hohlraum eingespeist werden kann.

In **Figur 3** wird der Einfluss des Dotierstoffes auf die Entladespannung bei 50 $\mu$A/cm$^2$ (25 °C, 50% rel. Luftfeuchtigkeit) für As100 (Arsen, 100-Ebene kristalliner Si-Wafer) und Sb100 (Antimon, 100-Ebene kristalliner Si-Wafer) sowie für B100 (Bor, 100-Ebene Si-Wafer) 25 $\mu$A/cm$^2$ (25 °C, 50% rel. Luftfeuchtigkeit) dargestellt.

In den Figuren 4a und 4b ist der Einfluss einer gepulsten Entladung dargestellt. Fig. 4b zeigt hierzu den Einfluss der gepulsten Entladung auf die Anoden Massenkonversionseffizienz (%)

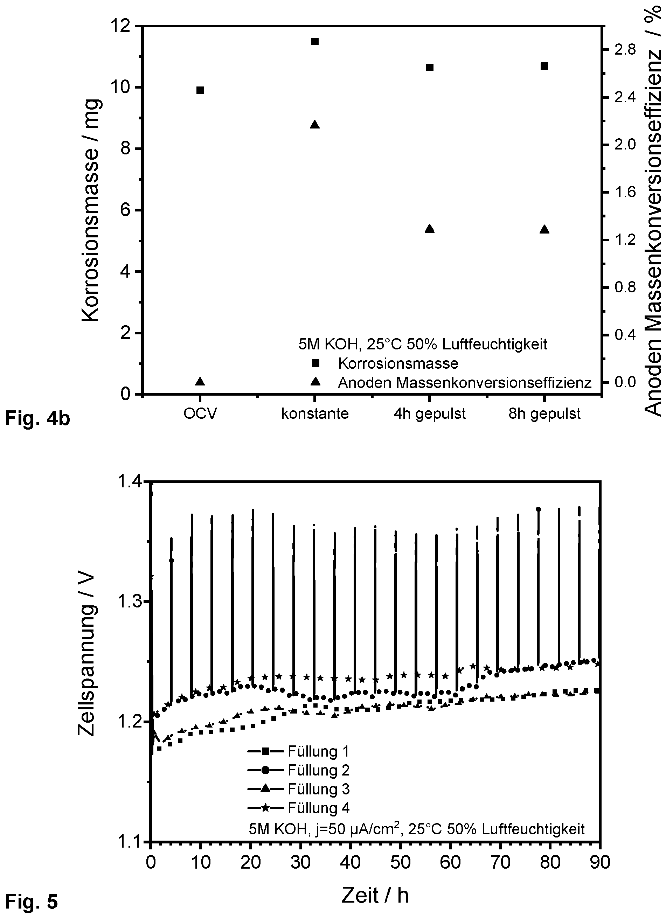

Aus den Figuren 4a und 4b wird ersichtlich, dass die Anoden Massenkonversionseffizienz (%) bei konstanter Entladung höher ist als bei gepulster Entladung. Die Korrosionsmassen bei gepulster Entladung über 4 Stunden und 8 Stunden sind vergleichbar, wie auch die darüber ermittelte Massenkonversionseffizienz. Bei gepulster Entladung können nach etwa 3 Pulsen bei einer Entladung mit 4 Stunden Pulsen die linearsten Zellspannungen (rechteckige Zellspannungskurven) erhalten werden.

Fig. 5: Einfluss der Art der Einspeisung des Elektrolyten während der Entladung oder während der einer Phase mit offener Zellspannung.

In Figur 5 stellen dar:

Füllung 1: Einspeisung des Elektrolyten mit einer Fließgeschwindigkeit von 0.1 mL/min, mit Zyklen zu je 4 Stunden Pumpe aus und 5 Minuten Pumpe an (0.1 mL/min) über insgesamt 90 Stunden.

Füllung 2: Einspeisung des Elektrolyten während OCV, die Entladung ist für 5 Minuten beendet während der Einspeisung des Elektrolyten Pumpe ist 4 Stunden ausgeschaltet und für 5 Minuten mit einer Fließgeschwindigkeit von 0,1 mL/min angeschaltet über insgesamt 90 Stunden.

Füllung 3: Einspeisung des Elektrolyten wird während die Zellspannung konstant gehalten. Die Entladespannung wurde für 5 Minuten während der Einspeisung des Elektrolyten (Pumpe 1,0 mL/min) konstant gehalten. Die Pumpe war für 4 Stunden ausgeschaltet und 5 Minuten angeschaltet über insgesamt 90 Stunden.

Füllung 4: Kontinuierliche Einspeisung des Elektrolyten während der Entladung über 90 Stunden mit einer Fließgeschwindigkeit von 0,1 mL/min.

Aus Figur 5 wird ersichtlich, dass die Spannung beim Entladen gemäß dem Betrieb der Zelle nach dem Programm Füllung 2, d.h. Einspeisung während der OCV Phase oder bei kontinuierlicher Einspeisung während einer Entladung am höchsten ist.

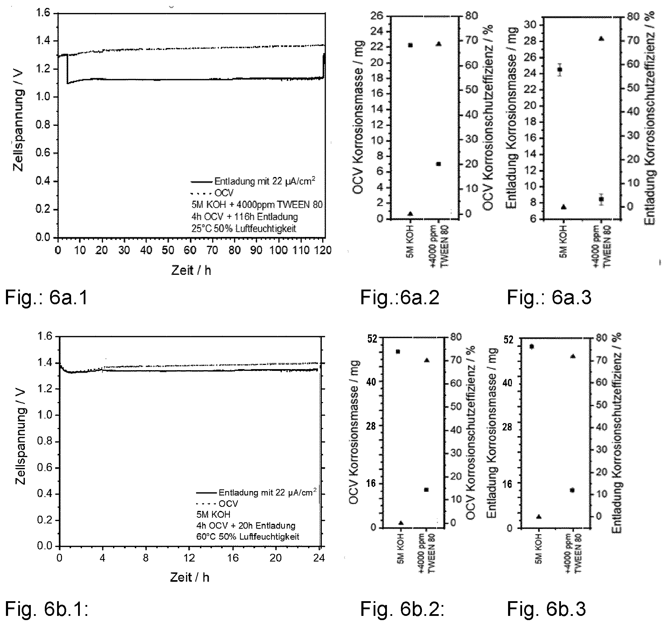

Die **Figuren 6a Nr. 1** bis **3**, **6b Nr. 1** bis **3** und **6c Nr. 1** bis **3** stellen dar, den Einfluss von Polyalkylenoxid-Gruppen aufweisenden Verbindungen im wässrigen Elektrolyten bei Raumtemperatur (25 °C) und erhöhter Temperatur (60 °C) in einer Zelle gemäß **Figure 1b** und Elektrodenfläche von 0,44 cm$^2$. Dargestellt sind in den Figuren 6a Nr. 1 bis 3 von links nach rechts: **Fig. 6a.1**: OCV und 22 Mikroampere Last Diagramm links (120 Stunden), **Figur 6a.2**: Korrosion unter OCV Mitte, **Figur 6a.3**: Korrosion unter elektrischer Last bei 25 °C (rechts, Entladung). **Figur 6a.1** stellt dar die Zellspannung von ca. 1,3 Volt bei Leerlaufspannung (OCV) sowie unter Last bei 22 $\mu$A/cm$^2$, (Mikroampere/cm$^2$) mit einer Zellspannung von ca. 1,1 Volt bei 25 °C und 50 % rel. Feuchte. In 5M KOH in Gegenwart von 4000 ppm-Gew. Tween 80 (CAS: 9005-65-6, Polysorbat). Die Korrosionsmasse in mg (■) beträgt im OCV Betrieb gemäß **Figur 6a.2** in 5 M KOH ohne Zusatz von Tween 80 bei ca. 22 mg und mit Zusatz von Tween 80 bei 25 °C etwa 7 mg. Die OCV Korrosionsschutzeffizienz in % (▲), die durch den Zusatz von Tween 80 erzielt wird, liegt somit bei ca. 70 %. Ohne Tween 80 ist das System ohne Korrosionsschutz (0%). Unter elektronischer Last (Fig. 6.a.3) bei 22 $\mu$A/cm$^2$ beträgt die Korrosionsmasse (■) in 5 M KOH ohne Zusatz von Tween 80 gemäß **Figur 6a.3** etwa 24,6 mg und mit Zusatz von Tween 80 bei 25 °C ca. 8 mg. Die OCV Korrosionsschutzeffizienz (▲) beträgt somit auch unter Last etwa 72%, die durch den Zusatz von Tween 80 erzielt wird.

Gleichfalls sind in den **Figuren 6b Nr. 1** bis **3** von links nach rechts dargestellt: **Fig. 6b.1**: OCV und 22 Mikroampere Last Diagramm links (24 Stunden), **Figur 6b.2**: Korrosion unter OCV Mitte, Figur 6b.3: Korrosion unter elektrischer Last rechts 60°C (Entladung) Figur 6b.1 stellt dar die Zellspannung von ca. 1,38 Volt bei Leerlaufspannung (OCV) sowie unter Last bei 22 $\mu$A/cm$^2$, (Mikroampere/cm$^2$) mit einer Zellspannung von ca. 1,35 Volt bei 60 °C und 50 % rel. Feuchte. In 5M KOH in Gegenwart von 4000 ppm-Gew. Tween80 (CAS: 9005-65-6, Polysorbat). Die Korrosionsmasse (■) beträgt im OCV Betrieb gemäß **Figur 6b.2** in 5 M KOH ohne Zusatz von Tween 80 bei ca. 49 mg und mit Zusatz von Tween 80 bei 60 °C etwa 14 mg. Die OCV Korrosionsschutzeffizienz (▲), die durch den Zusatz von Tween 80 erzielt wird, liegt somit bei ca. 72 %. Unter elektrischer Last (Entladung) bei 22 $\mu$A/cm$^2$ beträgt die Korrosionsmasse (■) in 5 M KOH ohne Zusatz von Tween 80 gemäß **Figur 6b.3** etwa 51 mg und mit Zusatz von Tween 80 bei 60 °C ca. 13 mg. Die OCV Korrosionsschutzeffizienz (▲) beträgt somit auch unter Last etwa 73%, die durch den Zusatz von Tween 80 erzielt wird. Ohne Zusatz ist die Korrosionsschutzeffizienz 0%.

## Patentansprüche

1. Verfahren zum Betrieb einer Vorrichtung umfassend mindestens eine elektrische Primärzelle, wobei die elektrochemische Primärzelle eine Anode, eine Kathode und einen Hohlraum zur Aufnahme eines Elektrolyten aufweist, wobei der Hohlraum mindestens eine Öffnung zur Zuführung und/oder Entfernung des Elektrolyten aufweist, wobei die Anordnung von Anode, Kathode und Hohlraum mit der mindestens einen Öffnung zur Zuführung und/oder Entfernung des Elektrolyten dergestalt ausgebildet ist, dass zwischen Anode und Kathode ein Stromfluss durch den Elektrolyten möglich ist, wenn der Hohlraum zumindest teilweise bis vollständig mit dem Elektrolyten befüllt ist, und, wobei die Anode Silizium umfasst und, wobei die Vorrichtung eine Temperiereinheit zur Einstellung der Temperatur des Elektrolyten aufweist,

   indem das Verfahren zum Betrieb der mindestens einen Primärzelle umfasst

   a) einen Entladeschritt in dem Elektrolyt im Hohlraum vorliegt und optional
   b) Betrieb in Leerlaufspannung,

   wobei a) der Entladeschritt die Schritte umfasst

   i) Einstellen der Temperatur des Elektrolyten auf eine definierte Temperatur, insbesondere auf eine Temperatur größer gleich 26 °C,
   iii) optional Entladen der mindestens einen Primärzelle.

**2.** Verfahren nach Anspruch 1, **dadurch gekennzeichnet, dass** der Hohlraum der Primärzelle über die mindestens eine Öffnung mit einem Reservoir, das mit Elektrolyt befüllbar ist kommuniziert.

**3.** Verfahren nach Anspruch 1 oder 2, **dadurch gekennzeichnet, dass** der Elektrolyt dem Hohlraum zugeführt wird und/oder im Hohlraum vorliegt.

**4.** Verfahren nach einem der Ansprüche 1 bis 3, **dadurch gekennzeichnet, dass** es umfasst eine Ermittlung des Innenwiderstandes der mindestens einen Silizium-Primärzelle mit den Schritten,

> 1. Messen einer Spannung der Primärzelle zu einer ersten Zeit, zu der die Primärzelle nicht zu einer elektronischen Last zugeschaltet ist Messung von Uo,
> 2. Zuschalten einer elektronischen Last, welches zu einem Stromfluss I1 führt,
> 3. Messung der Spannung U1,
> 4. Berechnen des Kurzschlussstromes Ik aus diesen Größen und Berechnung des Ri aus Uo/Ik. Ik=(Uo)*IkI1/(Uo-UkI1), optional
> 5. dynamische und/oder kontinuierliche Wiederholung der Berechnung und optional Abschätzen der Restkapazität.

**5.** Verfahren nach einem der Ansprüche 1 bis 4, **dadurch gekennzeichnet, dass** das Verfahren zum Betrieb der mindestens einen Primärzelle umfasst

> a) einen Entladeschritt und optional b) Betrieb in Leerlaufspannung,

wobei a) der Entladeschritt die Schritte umfasst

> i) optional Vorlegen von Elektrolyt in dem Reservoir und
> ii) Vorlegen von Elektrolyt, insbesondere eines wässrigen, alkalischen Elektrolyten, im Hohlraum,
> iii) optional Entladen der mindestens einen Primärzelle, wobei

>> - ein Einstellen der Temperatur des Elektrolyten auf eine definierte Temperatur i) im Reservoir, in einer Leitung zwischen Reservoir und Hohlraum und/oder ii) im Hohlraum erfolgt, insbesondere auf eine Temperatur größer gleich 26 °C.

**6.** Verfahren nach einem der Ansprüche 1 bis 5, **dadurch gekennzeichnet, dass**

> a) der Entladeschritt umfasst ii) Entladen der mindestens einen Primärzelle, indem ein elektrischer Verbraucher an die Kathode und Anode angeschlossen wird.

**7.** Verfahren nach einem der Ansprüche 1 bis 6, **dadurch gekennzeichnet, dass** die Temperatur des Elektrolyten auf eine Temperatur größer gleich 30 °C bis unter 95 °C eingestellt wird, insbesondere wird die Temperatur des Elektrolyten auf eine Temperatur größer gleich 40 °C und insbesondere auf kleiner gleich 100 °C, vorzugsweise wird die Temperatur des Elektrolyten auf eine Temperatur größer 50 °C, besonders bevorzugt auf größer gleich 60 °C eingestellt.

**8.** Verfahren nach einem der Ansprüche 1 bis 7, **dadurch gekennzeichnet, dass** ein Betrieb der mindestens einen Primärzelle in b) Leerlaufspannung erfolgt, indem i) der Elektrolyt in dem Reservoir und/oder im Hohlraum auf eine Temperatur kleiner 26 °C eingestellt wird, insbesondere mittels der Temperiereinheit.

**9.** Verfahren nach einem der Ansprüche 1 bis 8, **dadurch gekennzeichnet, dass** das Verfahren ein computerimplementiertes Verfahren (ein von einem Computer ausgeführtes Verfahren ist).

**10.** Vorrichtung umfassend mindestens eine elektrochemische Primärzelle, wobei die Primärzelle aufweist eine Anode, eine Kathode, einen Hohlraum zur Aufnahme eines Elektrolyten und der Hohlraum mindestens eine Öffnung zur Zuführung und/oder Entfernung des Elektrolyten in den Hohlraum aufweist, wobei die Anordnung von Anode, Kathode und Hohlraum mit der mindestens einen Öffnung Zuführung und/oder Entfernung des Elektrolyten dergestalt ist, dass zwischen Anode und Kathode ein Stromfluss durch den Elektrolyten möglich ist, wenn der Hohlraum zumindest teilweise bis vollständig mit dem Elektrolyten befüllt ist, und wobei die Anode als Anodenmaterial Silizium umfasst,

**dadurch gekennzeichnet, dass**
die Vorrichtung eine Temperiereinheit zur Einstellung der Temperatur des für den Betrieb der Primärzelle einzufüllenden Elektrolyten aufweist.

11. Vorrichtung nach Anspruch 10, **dadurch gekennzeichnet, dass** die Anode als Anodenmaterial Silizium mit einem
Gehalt an Bor von 10 Gew.-ppm bis 1,8 Gew.-% in Bezug auf die Gesamtzusammensetzung des Siliziums von 100
Gew.-% aufweist, insbesondere weist das Anodenmaterial Silizium-Partikel einen Gehalt an Bor von
10 Gew.-ppm bis 1,8 Gew.-% in Bezug auf die Gesamtzusammensetzung der Silizium-Partikel von 100 Gew.-%,
besonders bevorzugt ist Anodenmaterial in Form von aneinander gesinterten Silizium-Partikeln.

12. Vorrichtung nach Anspruch 10 oder 11, **dadurch gekennzeichnet, dass** der Hohlraum mindestens eine Öffnung
zur Zuführung und/oder Entfernung des Elektrolyten aufweist, und insbesondere der Hohlraum der Primärzelle über
die mindestens eine Öffnung mit einem Reservoir, das mit Elektrolyt befüllbar ist, kommuniziert.

13. Vorrichtung nach einem der Ansprüche 10 bis 12, **dadurch gekennzeichnet, dass** der Hohlraum in der Primärzelle
eine erste und eine zweite Öffnung aufweist, wobei durch die erste Öffnung ein Elektrolyt in den Hohlraum eingeführt
und aus der zweiten Öffnung entfernbar ist.

14. Vorrichtung nach einem der Ansprüche 10 bis 13, **dadurch gekennzeichnet, dass** der Hohlraum in der Primärzelle
eine erste und optional eine zweite Öffnung aufweist, wobei vorzugsweise die erste und zweite Öffnung jeweils
unabhängig über eine Leitung mit dem Reservoir verbunden ist, bevorzugt entspricht mindestens ein Teil der jeweiligen Leitung einem inneren oder äußeren Rohrs eines Rohr-in-Rohr Wärmetauschers umfassend ein inneres
Rohr und ein äußeres Rohr, welches das innere Rohr umschließt, wobei der Wärmetauscher ein Teil der Temperiereinheit ist.

15. Vorrichtung nach einem der Ansprüche 10 bis 14, **dadurch gekennzeichnet, dass** die Temperiereinheit umfasst
mindestens einen Wärmetauscher und/oder mindestens ein Heizmittel, wobei das Heizmittel umfasst eine elektrische
Widerstands-Heizung, induktives Heizmittel, eine elektrische Infrarot-Heizung und/oder eine Mikrowellen-Heizung
und optional eine elektronische Steuereinheit zur Steuerung des mindestens einen Wärmetauschers und/oder des
mindestens einen Heizmittels und einen oder mehrere Temperatursensoren.

16. Vorrichtung nach einem der Anspruche 10 bis 15, **dadurch gekennzeichnet, dass** die Vorrichtung, insbesondere
die Temperiereinheit, mindestens einen Temperatursensor ausweist, insbesondere Temperatursensor mit elektrischer Signalweiterleitung, zur Bestimmung der Temperatur des Elektrolyten im Hohlraum, in der Leitung der ersten
Öffnung, in der Leitung der zweiten Öffnung und/oder im Reservoir vorhanden ist.

17. Vorrichtung nach einem der Anspruche 9 bis 15, **dadurch gekennzeichnet, dass** der mindestens eine oder die
mehreren Temperatursensoren, insbesondere der Temperatursensor mit elektrischer Signalweiterleitung, bevorzugt
mit Prozessanschluss, ausgewählt ist aus Temperatursensoren umfassend eine Bimetall-Spirale, Temperatursensor
mit Widerstandsmessung oder Temperatursensor umfassend Thermoelement (Verhalten gemäß Seebeck-Effekt).

18. System umfassend eine Vorrichtung nach einem der Ansprüche 10 bis 17, wobei die Vorrichtung größer gleich 2
Primärzellen umfasst, insbesondere bis 100 Primärzellen.

19. System zur Datenverarbeitung umfassend Mittel zur Ausführung des Verfahrens nach einem der Ansprüche 1 bis
9, insbesondere für den Betrieb eines Systems nach Anspruch 18.

20. Computerprogrammprodukt, umfassend Befehle, die bei der Ausführung des Programms durch einen Computer
diesen veranlasst, das Verfahren nach einem der Ansprüche 1 bis 9 und/oder das Verfahren nach einem der
Ansprüche für den Betrieb einer Vorrichtung nach einem der Ansprüche 10 bis 17 oder für den Betrieb eines Systems
nach Anspruch 18 auszuführen.

21. Computer lesbares Medium, umfassend Befehle, die bei der Ausführung durch einen Computer diesen veranlassen,
das Verfahren nach einem der Ansprüche 1 bis 9 auszuführen und/oder das Verfahren nach einem der Ansprüche
für den Betrieb einer Vorrichtung nach einem der Ansprüche 9 bis 16 oder für den Betrieb eines Systems nach
Anspruch 18 auszuführen.

**Fig. 1a**

**Fig. 1b**

Fig. 1c

**Fig. 2a**

**Fig. 2b**

**Fig. 3**

**Fig. 4a**

**Fig. 4b**

**Fig. 5**

Fig.: 6a.1

Fig.:6a.2

Fig.: 6a.3

Fig. 6b.1:

Fig. 6b.2:

Fig. 6b.3

# EP 4 235 835 A1

**EUROPÄISCHER RECHERCHENBERICHT**

Nummer der Anmeldung

EP 22 15 8276

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DURMUS YASIN EMRE ET AL: "Long run discharge, performance and efficiency of primary Silicon-air cells with alkaline electrolyte", ELECTROCHIMICA ACTA, ELSEVIER, AMSTERDAM, NL, Bd. 225, 21. Dezember 2016 (2016-12-21), Seiten 215-224, XP029911334, ISSN: 0013-4686, DOI: 10.1016/J.ELECTACTA.2016.12.120 | 1-21 | INV. H01M4/06 H01M4/24 H01M4/38 H01M4/50 H01M6/04 H01M50/627 H01M50/673 H01M50/77 |
| Y | * Seite 215, linke Spalte, Absatz Introduction – Seite 223, rechte Spalte, Absatz Conclusions; Abbildungen 1-13 * ----- | 7,15-17 | ADD. H01M50/102 |
| X | US 5 260 144 A (O'CALLAGHAN WILFRID B [CA]) 9. November 1993 (1993-11-09) | 1-21 | |
| Y | * Spalte 2, Zeile 6 – Spalte 10, Zeile 30; Ansprüche 1-20; Abbildungen 1-6; Beispiel 3 * ----- | 7 | |
| X | DE 10 2014 208047 A1 (MAHLE INT GMBH [DE]) 29. Oktober 2015 (2015-10-29) | 1-21 | **RECHERCHIERTE SACHGEBIETE (IPC)** |
| Y | * Seite 1, Absatz 0012 – Seite 12, Absatz 0099; Abbildungen 1,2 * ----- | 15-17 | H01M |

-/--

Der vorliegende Recherchenbericht wurde für alle Patentansprüche erstellt

| Recherchenort | Abschlußdatum der Recherche | Prüfer |
|---|---|---|
| München | 17. August 2022 | Polisski, Sergej |

EPO FORM 1503 03.82 (P04C03)

Seite 1 von 2

Europäisches Patentamt

European Patent Office

Office européen des brevets

**EUROPÄISCHER RECHERCHENBERICHT**

Nummer der Anmeldung

EP 22 15 8276

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DURMUS YASIN EMRE ET AL: "Analysis ondischarge behavior andperformance ofAs- andB-doped silicon anodes innon-aqueous Si-air batteries underpulsed discharge operation", JOURNAL OF APPLIED ELECTROCHEMISTRY, [Online] Bd. 1, Nr. 50, 2. Dezember 2019 (2019-12-02), Seiten 93-109, XP055952378, Gefunden im Internet: URL:https://link.springer.com/content/pdf/ 10.1007/s10800-019-01372-5.pdf> [gefunden am 2022-08-17] * das ganze Dokument *<br>----- | 1-21 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 17. August 2022 | Polisski, Sergej |

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 22 15 8276

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-08-2022

| Im Recherchenbericht angeführtes Patentdokument | Datum der Veröffentlichung | Mitglied(er) der Patentfamilie | Datum der Veröffentlichung |
|---|---|---|---|
| US 5260144 A | 09-11-1993 | AT 109928 T | 15-08-1994 |
| | | AU 5417090 A | 22-10-1990 |
| | | CA 1315840 C | 06-04-1993 |
| | | DE 69011514 T2 | 24-11-1994 |
| | | EP 0464111 A1 | 08-01-1992 |
| | | JP H04504329 A | 30-07-1992 |
| | | KR 920702034 A | 12-08-1992 |
| | | US 5260144 A | 09-11-1993 |
| | | WO 9011625 A1 | 04-10-1990 |
| DE 102014208047 A1 | 29-10-2015 | CN 106471648 A | 01-03-2017 |
| | | DE 102014208047 A1 | 29-10-2015 |
| | | EP 3138151 A1 | 08-03-2017 |
| | | JP 6637441 B2 | 29-01-2020 |
| | | JP 2017517100 A | 22-06-2017 |
| | | KR 20160146995 A | 21-12-2016 |
| | | US 2017047626 A1 | 16-02-2017 |
| | | WO 2015165707 A1 | 05-11-2015 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *CHEMICAL ABSTRACTS,* 9005-65-6